Europäisches Patentamt

European Patent Office

Office européen des brevets

(11) Publication number: **0 182 963**
**B1**

## (12) EUROPEAN PATENT SPECIFICATION

(45) Date of publication of patent specification: **02.01.91**

(21) Application number: **85107059.9**

(22) Date of filing: **27.10.81**

(60) Publication number of the earlier application in accordance with Art. 76 EPC: **0 051 422**

(51) Int. Cl.⁵: **G 06 F 7/50, G 06 F 5/00, H 03 M 7/24**

(54) An adder for floating point data.

(30) Priority: **31.10.80 JP 152051/80**

(43) Date of publication of application:
**04.06.86 Bulletin 86/23**

(45) Publication of the grant of the patent:
**02.01.91 Bulletin 91/01**

(84) Designated Contracting States:
**DE FR GB IT**

(56) References cited:
**FR-A-1 435 080**
**GB-A-1 157 033**
**GB-A-2 033 626**
**US-A-3 961 167**

**IBM TECHNICAL DISCLOSURE BULLETIN, vol. 9, no. 6, November 1966, pages 598-599, New York, US; M. LITWAK et al.: "Exponent update and latch in three levels"**

(73) Proprietor: **HITACHI, LTD.**
**6, Kanda Surugadai 4-chome**
**Chiyoda-ku, Tokyo 100 (JP)**

(73) Proprietor: **HITACHI DENSHI KABUSHIKI KAISHA**
**23-2, Kanda-suda-cho, 1-chome**
**Chiyoda-ku Tokyo (JP)**

(72) Inventor: **Hagiwara, Yoshimune**
**1473 Josuihoncho**
**Kodaira-shi Tokyo (JP)**
Inventor: **Sugiyama, Shizuo**
**201 Megurida-cho**
**Kodaira-shi Tokyo (JP)**
Inventor: **Maeda, Narimichi**
**1-35-30 Kashiwa-cho**
**Tachikawa-shi Tokyo (JP)**
Inventor: **Yumoto, Osamu**
**4-815, Nishi-koigakubo**
**Kokubunji-shi Tokyo (JP)**
Inventor: **Akazawa, Takashi**
**1-12-16 Gakuen-nishimachi**
**Kodaira-shi Tokyo (JP)**
Inventor: **Kobayashi, Masahito**
**3514, Totsuka-cho Tosuka-ku**
**Yokohama-shi Kanagawaken (JP)**

Courier Press, Leamington Spa, England.

**EP 0 182 963 B1**

(72) Inventor: **Kita, Yasuhiro**
**2-29-9, Akatsuki-cho**
**Hachioji-shi Tokyo (JP)**
Inventor: **Kita, Yuzo**
**2-10-16 Shimizugaoka**
**Fuchu-shi Tokyo (JP)**

(74) Representative: **Ellis, Edward Lovell et al**
**MEWBURN ELLIS & CO. 2/3 Cursitor Street**
**London EC4A 1BQ (GB)**

**Description**

The present invention relates in general to a digital processor which can process the data of voices, or images, in real time and which possesses the ability to perform multiplication and addition at high speed and with high accuracy, and more particularly to an adder for floating point data.

In apparatus for synthesizing and analyzing speeches or in apparatus in the communications field such as a MODEM (modulator-demodulator), digital filter, CODEC and echo canceller, the application of a signal processor capable of processing digitized signals in real time has been studied.

The signal processor is provided as an LSI which contains a program memory and a multiplier as well as an adder/subtracter for exculsive use for processing data at high speed. It is adapted to various usages by changing a program.

In the case where the signal processor is used for, e.g. the filter processing of voice signals, an internal operation data becomes a comparatively wide dynamic range of 16—28 bits due to multiplication and addition operations. Therefore, when the structure of the multiplier circuit or the adder/subtracter circuit is made the fixed point data operation type, the hardware scale becomes larger exponentially with an increase in the number of bits of the operation data, and the LSI implementation becomes difficult. This problem can be solved by making the construction of the processor the floating point data operation type. However, when the data processing system of a conventional general-purpose computer is constructed so that the multiplier and adder/subtracter circuits are connected by data buses and that they perform floating point operations independently of each other, the multiplication and addition operations which are the fundamental operation of the signal processor, take a long time, so that the real time operation of the signals becomes difficult.

One type of a digital data processor is disclosed in United States Patent Specification 4,075,704. The digital process including a plurality of memory registers, a floating point adder, a floating multiplier inter-coupled by a plurality of simultaneously operable parallel buses facilitating parallel multiple operations during one clock cycle. The floating point adder and multiplier each include a number of stages separated by intermediate temporary storage registers which receive the partial results of a computation for use by the next stage during the next clock period. Floating point additions, multiplications and other arithmetic and logical are produced during each clock cycle. In the article by LITWAK a.o.: "Exponent Update and Latch in Three Levels", disclosed in I.B.M. Technical Disclosure Bulletin, Vol. 9 No. 6. (November 1966) pp. 598—599, the checking device disclosed includes a floating point adder, with a post shifter, leading zero detector, and modifying means.

A computing unit is disclosed in British Patent Specification 1,157,033, for adding a pair of floating point operands according to the precharacterizing part of claims 1, 4 and 7. The present invention is characterized by the features as claimed in the characterizing parts of claims 1, 4 and 7.

The present invention will now be described in greater detail by way of example with reference to the accompanying drawings, wherein:—

Fig. 1 is a block diagram showing one preferred form of a digital signal processor;

Fig. 2 is a block diagram showing the detailed arrangement of the multiplier shown in Fig. 1;

Fig. 3(A) is a diagram for explaining the bit format of an input data, whilst Fig. 3(B) is a diagram for explaining the bit format of an internal operation data in the adder/subtracter shown in Fig. 1;

Fig. 4(A) and 4(B) are block diagrams showing in combination the detailed arrangement of the adder/subtracter shown in Fig. 1;

Figs. 5(A) and 5(B) are diagrams for explaining the operation of a shift circuit 76 shown in Fig. 4B;

Fig. 6(A) and 6(B) are diagrams for explaining another operation of the shift circuit 76 shown in Fig. 4B;

Fig. 7 is a circuit diagram showing a preferred form of the shift circuit 76;

Figs. 8(A) and 8(B) are diagrams for explaining output data in the absence and presence of a compensation for a data overflow respectively;

Fig. 9 is a circuit diagram showing details of the blocks 85, 87 and 89 which form an output correction circuit in the circuit of Fig. 4(B);

Figs. 10(A) and 19(D) are diagrams showing the aspects of changes of floating point data in various parts of the signal processor;

Figures 11(A) to 11(D) are diagrams showing the aspects of fixed point data;

Figure 12 is a circuit diagram showing a preferred form of the input selector circuit 60 shown in Figure 4A;

Figure 13 is a circuit diagram showing a preferred form of the input selector circuit 61 shown in Figure 4A;

Figure 14 is a circuit diagram showing a preferred form of the output switching circuit 17 shown in Figure 1;

Figure 15 is a diagram showing the dynamic range of the digital signal processor shown in Figure 1;

Figure 16 is a time chart for explaining the operation of the processor; and

Figures 17 and 18 are block diagrams each showing a typical form of use of the signal processor.

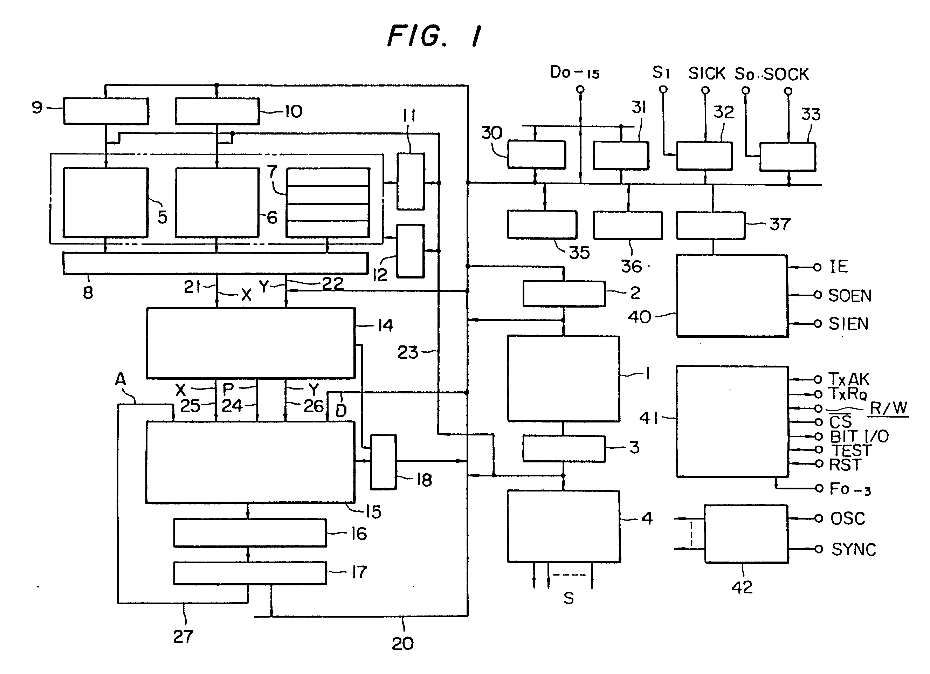

Referring first to Figure 1, the digital signal processor includes a memory 1 which serves to store a program, a program counter 2 which indicates a readout address of the program memory 1, an instruction register 3 which is connected to the program memory 1, and a control circuit 4 which generates various control signals S for operating the processor from an instruction word fetched into the instruction register 3. Each instruction word to be stored in the memory 1 consists of, for example, 22 bits and includes an operation code and data, an address or an address control information. The program counter 2 and the instruction register 3 are connected to a data bus (D bus) 20 of 16 bits.

The digital processor further includes memories 5 and 6 for storing data, and a general-purpose register 7. One of the memories 5 and 6 is a random access memory (RAM) and the other is a read-only memory (ROM). Each memory may well be a complex consisting of a plurality of ROMs or RAMs of small capacities. The memory stores data of 16 bits, and each data is read out on an X bus 21 or a Y bus 22 of 16 bits through a selector circuit 8. Registers 9 and 10 are provided which appoint the lower addresses of the data memories 5 and 6, whilst registers 11 and 12 are provided which appoint the upper addresses of the memories. The register 11 affords the upper address of the data to be read out onto the X bus 21, whilst the register 12 affords the upper address of the data to be read out with the Y bus 22 or the address of the general-purpose register 7. These registers are given address information through a data bus 23 from the instruction register 3.

The digital processor also includes a multiplier 14 of the floating point operation type which calculates the product between the two data supplied from the X bus 21 and the Y bus 22 and which delivers the result to a P bus 24. As will be described later, this multiplier includes registers for holding the two input data X and Y and delivers the two unoperated data X and Y to an X bus 25 and a Y bus 26 as they are, respectively.

The digital processor also includes an adder/subtracter 15 of the floating point operation type, which executes an operation by receiving the output data X, Y and P of the multiplier 14 and data D and A of data buses 20 and 27 and which delivers the result of the operation to an accumulator 16. A switching circuit 17 supplies the data bus (A bus) 27 of 20 bits with the floating point data latched in the accumulator 16 and converts the data into data of 16 bits and delivers the latter to the D bus 20. A status code register 18 is connected to the multiplier 14 and the adder/subtracter 15 and stores a status code concerning the operated results thereof.

An output register 30 delivers the data of 16 bits on the data bus 20 to external terminals $D_0$—$D_{15}$ in parallel, whilst an input register 31 receives the 16-bit data from the external terminals onto the data bus 20 in parallel. A shift register 32 of 16 bits loads serial input data from a terminal SI in snychronism with the input clock of a terminal SIC in the period during which the input pulse of a terminal SIEN is "1". A shift register 33 of 16 bits serially delivers data to a terminal SO in synchronism with the input clock of a terminal SOCK in the period during which the input pulse of a terminal SOEN is "1". These two shift registers are respectively connected with the data bus 20 in a 16-bit parallel fashion.

A register 35 is provided controlling the operating status of the processor, whilst the counter is provided in which a repetition number is set in the case where the processor is caused to repeatedly execute a certain instruction in accordance with a repeat instruction. A status register 37 is provided for indicating the internal status of the processor. The contents of the registers 35 and 37 can be respectively written and read externally through the data bus 20 and the terminals $D_0$—$D_{15}$.

A control circuit 40 is provided for controlling an interrupt to a processor operation and an input/output operation. By way of example, it operates so as to render the shift registers 32 and 33 operable with the leading edges of the input signals of the terminals SIEN and SOEN and to apply an interrupt to the program with the trailing edges of the respective signals and so as to start the registers 30 and 31 with the leading edges of the input and output signals of a terminal IE and to apply an interrupt to the program with the trailing edges thereof. A function control circuit 41 is provided for controlling the processor operation in response to a signal from an external control unit (for example, a microcomputer). By way of example, it receives from a terminal TxAK an acceptance signal for a DMA transfer mode, from a terminal R/W a signal indicating the transfer direction of parallel input/output data, from a terminal CS a signal indicating that an external device has selected the processor, from a terminal TEST an appointment signal for a test operation mode, from a terminal RST a reset signal, and from a terminal $F_{0-3}$ an operation control signal by the external device, and it delivers a parallel data transfer request signal from a terminal TxRQ. A terminal BIT I/O is a bidirectional input/output terminal for receiving or delivering data every bit. A clock pulse generator circuit 42 is provided for generating various internal clock pulses necessary for processor operation and supplies a terminal SYNC with a clock for synchronizing the internal operation of the processor and an external system. It receives a fundamental clock pulse through a terminal OSC from an external circuit.

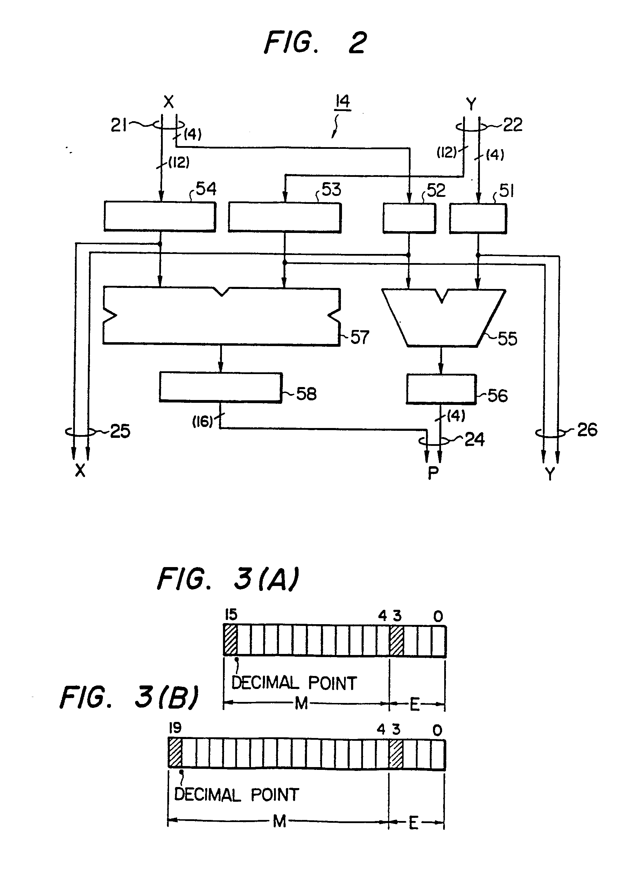

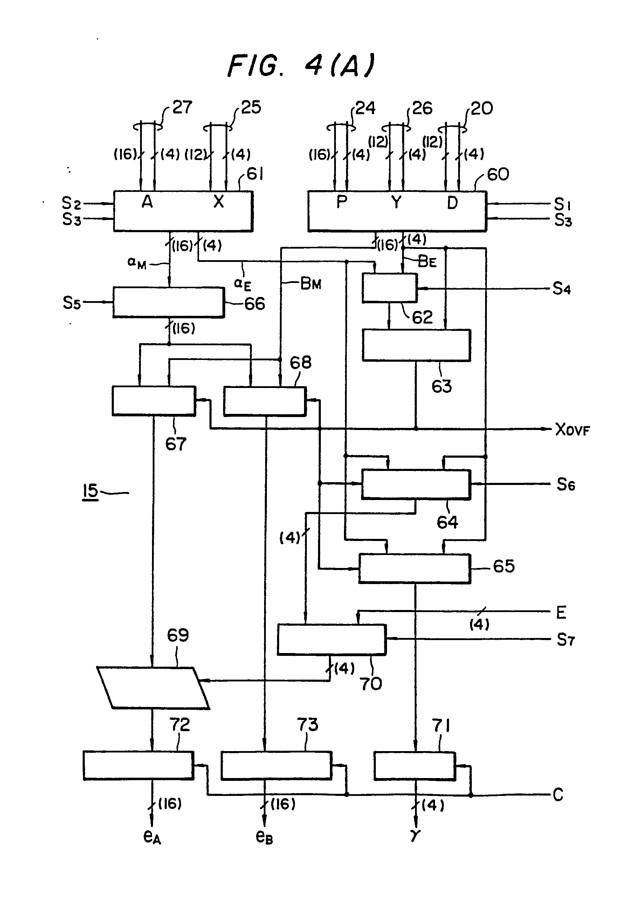

The multiplier 14 and the adder/subtracter 15 will now be described in greater detail with reference to Figures 2, 3(A) and 3(B), and 4(A) and 4(B).

As shown in Figure 2, the 16-bit data of the X bus 21 and Y bus 22 are applied to the multiplier 14. These data are supplied from the memories 5 and 6, the general-purpose register 7 or the data bus 20. As illustrated in Figure 3(A), each of the data consists of an exponent part of less significant 4 bits and a mantissa part of more significant 12 bits. The most significant bits of the respective parts as indicated by hatched areas, i.e., the bits at positions of $2^3$ and $2^{15}$ are sign bits. A decimal point lies between $2^{15}$ and $2^{14}$. As shown in Figure 2, the exponent part data and mantissa part data supplied from the X bus 21 and Y bus 22 are respectively stored in registers 51 and 52 and registers 53 and 54. The exponent part data of the registers 51 and 52 are added by an adder circuit 55, and the sum is delivered to the P bus 24 through an ouptut register 56 of 4 bits. On the other hand, the mantissa part data of the registers 53 and 54 are applied to a multiplier circuit 57 having a circuit arrangement similar to that in the case of the ordinary fixed point

4

operation, and the multiplied result has its more-significant 16 bits delivered to the P bus 24 through an output register 58. That is, the operated output of the multiplier 14 is transformed into data of 20 bits consisting of an exponent part of less significant 4 bits and a mantissa part of more significant 16 bits as shown in Figure 3(B) and is applied to the adder/subtracter 15. The outputs of the registers 52 and 54 are transmitted to the X bus 25 and the outputs of the registers 51 and 53 to the Y bus 26, and they are respectively applied to the adder/subtracter 15 as data of 16 bits.

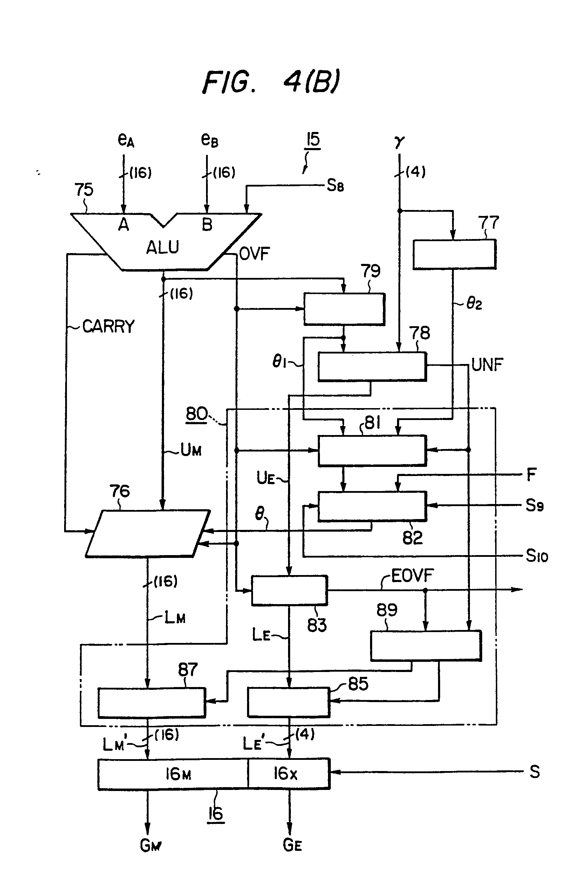

The arrangement of the adder/subtracter 15 is shown in Figures 4(A) and 4(B). As illustrated in Figure 4(A), the adder/subtracter is supplied with the data D, P, X, Y and A through the buses 20 and 24 to 27. The data P, Y and D are applied to a selector circuit 60, and one data appointed by a control signal $S_1$ is selected. The data A and X are applied to a selector circuit 61, and one data appointed by a control signal $S_2$ is selected. It should be noted that each of the input data D, X and Y is the 16-bit data shown in Figure 3(A). As will be stated later, the selector circuits 60 and 61 are so constructed that when the 16-bit data have been appointed, they convert these data into the 20-bit data shown in Figure 3(B) and deliver the latter data. This bit exchange differs depending upon whether the intput data D, X and Y are fixed point data or floating point data, and the exchange operation is assigned by a control signal $S_3$. Thus, input data in the fixed point representation can also be processed by the adder/subtracter of the floating point operation type. Control signals $S_1$, $S_2$, $S_3$ ........ and $S_n$ are provided from the control circuit 4 in correspondence with instruction words in the program.

Letting the output data from the selector circuit 60 to $\beta$ (exponent part: $\beta_E$, mantissa part: $\beta_M$) and the output data from the selector circuit 61 be $\alpha$ (exponent part $\alpha_E$, mantissa part: $\alpha_M$), the exponent part data $\alpha_E$ is applied to a comparator circuit 63 through a selector circuit 62 and is compared in magnitude with the exponent part data $\beta_E$. The exponent part data $\alpha_E$ and $\beta_E$ are also applied to a subtractor circuit 64 and a selector circuit 65. The mantissa part data $\alpha_M$ is applied to selector circuits 67 and 68 through a negate circuit 66, whilst the mantissa part data $\beta_M$ is directly applied to the selector circuits 67 and 68. In this embodiment, the negate circuit 66 is provided in order to realize the subtraction between the data $\alpha$ and $\beta$ by the use of an arithmetic and logic unit (ALU) 75, and the data $\alpha_M$ passes through the negate circuit without any change in the case of addition. Each of the selector circuits 65, 67 and 68 selects one of its two inputs in response to the output signal of the comparator circuit 63. With a timing signal C, the output of the selector circuit 65 is latched in a latch circuit 71, the output of the selector circuit 67 is latched in a latch circuit 72 through a shift circuit 69, and the output of the selector circuit 68 is latched in a latch circuit 72. The subtractor circuit 64 is also controlled by the output of the comparator circuit 63, and it operates so as to subtract the smaller one from the greater one of the inputs $\alpha_E$ and $\beta_E$ in accordance with the comparison result. The shift circuit 69 shifts its input data rightwards that number of bits which corresponds to the output of the subtracter circuit 64 obtained through a selector circuit 70. The operation of the shift circuit 69 can also be controlled by another data E applied to the selector circuit 70, and the selection of the shift number of bits is made with a control signal $S_7$.

A shown in Figure 4(B), the outputs $e_A$ and $e_B$ of the latch circuits 72 and 73 are supplied to the fixed point operation type adder (ALU) 75 which is operated by a control signal $S_8$, and the added result $U_M$ is applied to a leftwards shift circuit 76. On the other hand, the output $\gamma$ of the latch circuit 71 is applied to a constant adder circuit 77 and one input terminal of a subtracter circuit 78. A zero detector 79 is provided which judges the output $U_M$ of the adder 75. In the case where the output $U_M$ of the adder 75 afforded in the complement representation is a positive number, the zero detector 79 counts the number of continuous "0" bits succeeding to a sign bit located at the most significant bit of the output $U_M$. In the case where the output $U_M$ is a negative number, it counts the number of continuous "1" bits succeeding to the sign bit. The output $\theta_1$ of the zero detector 79 is applied to the shift circuit 76 through an output correction circuit 80 which is provided for the normalization of data and a protection against overflow, and it determines the number of bits of data to be shifted by this shift circuit. The output $\theta_1$ of the zero detector 79 is also applied to the other input terminal of the subtracter circuit 78, and the output $U_E$ of this subtracter circuit is applied to the exponent part 16X of the accumulator 16 through the output correction circuit 80. The mantissa part 16M of the accumulator 16 is supplied with an output data $L_M'$ from the shift circuit 76 as corrected in the output correction circuit 80.

The output correction circuit 80 comprises:

a selector circuit 81 which selects either the output $\theta_1$ of the zero detector 79 or the output $\theta_2$ of the constant adder circuit 77 in response to an overflow detection signal OVF provided from the adder 75 and an overflow detection signal UNF provided from the subtracter circuit 78; a selector circuit 82 which applies either the output of the selector circuit 81 or a data F given by the program, to the shift circuit 76 as a shift bit number-indicating signal $\theta$ in response to a control signal $S_9$ based on the program; an increment circuit 83 which adds 1 (one) to the subtracter circuit output $U_E$ when the overflow signal OVF is "1" and which delivers a signal EOVF when the added result $L_E$ has also undergone an overflow;

an exponent part correction circuit 85 which is connected between the increment circuit 83 and the exponent part 16X of the accumulator 16;

a mantissa part correction circuit 87 which is connected between the shift circuit 76 and the mantissa part 16M of the accumulator 16; and

a control circuit 89 which controls the operations of the two correction circuits 85 and 87 in response to the signals UNF and EOVF.

The adder/subtracter 15 operates as follows.

The respective outputs α and β of the two input selector circuits 61 and 60 shown in Figure 4(A) are data in the floating point representation, and their values are denoted by the following equation:

$$\left.\begin{array}{l} \alpha = \alpha_M \cdot 2^{\alpha_E} \\[2mm] \beta = \beta_M \cdot 2^{\beta_E} \end{array}\right\} \quad \cdots\cdots(1)$$

Assuming now the case of performing an addition operation between the two data α and β being in the relation of $\alpha_E > \beta_E$, the added result Z is given by:

$$\begin{aligned} Z &= \alpha_M \cdot 2^{\alpha_E} + \beta_M \cdot 2^{\beta_E} \\[2mm] &= \left[\alpha_M + \beta_M \cdot 2^{-(\alpha_E - \beta_E)}\right] \cdot 2^{\alpha_E} \end{aligned} \quad \cdots\cdots(2)$$

The comparator circuit 63 compares the magnitudes of the data $\alpha_E$ and $\beta_E$. It causes the selector circuit 65 to select the greater exponent part data $\alpha_E$, causes the selector circuit 67 to select the mantissa part data $\beta_M$ corresponding to the smaller exponent part $\beta_E$, causes the selector circuit 68 to select the mantissa part data $\alpha_M$ corresponding to the greater exponent part $\alpha_E$, and applies a control signal to the subtractor circuit 64 so as to subtract the smaller exponent $\beta_E$ from the greater exponent $\alpha_E$. During the execution of the addition operation, the selector circuit 70 selects the output $(\alpha_E - \beta_E)$ from the subtracter circuit 64, and the shift circuit 69 operates so as to shift the output $\beta_M$ of the selector circuit 67 rightwards (towards less significant bits) $(\alpha_E - \beta_E)$ bits. As a result, the respective outputs of the latch circuits 71, 72 and 73 become $\gamma = \alpha_E$, $e_A = \beta_M \cdot 2^{-(\alpha_E - \beta_E)}$ and $e_B = \alpha_M$, and the output $U_M$ of the adder 75 having performed the operation of $e_A + e_B$ represents the mantissa part of equation (1). Accoridingly, the operated value Z at this stage is indicated by the following equation:

$$Z = U_M \cdot 2^\gamma \quad (3)$$

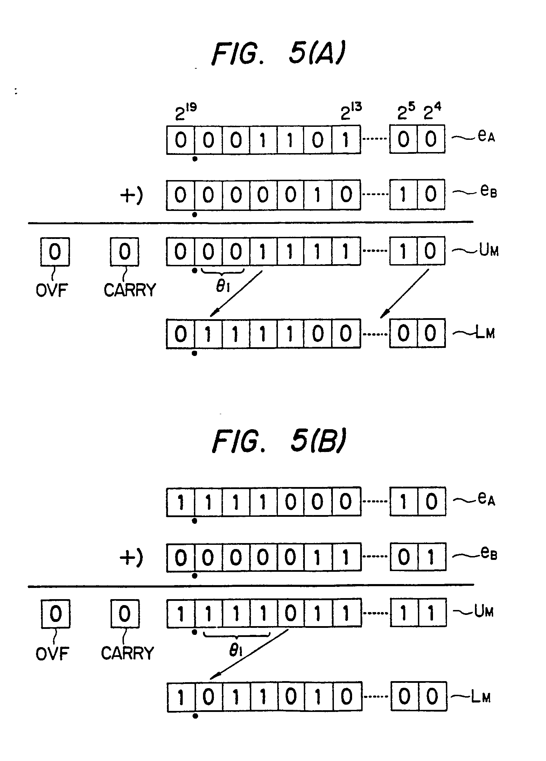

The zero detector circuit 79 and the leftwards shift circuit 76 serve to normalize the adder output $U_M$ so as to maximize its absolute value. When, as illustrated in Figure 5(A), the number $\theta_1$ of the continous "0"s succeeding to the sign bit (below the decimal point) of the data $U_M$ is detected by the zero detector circuit 79 and the data $U_M$ is shifted leftwards (onto the side of the most significant bit) $\theta_1$ bits by the shift circuit 76, a mantissa part data $L_M$ whose absolute value is the maximum is obtained. In the case where the data $U_M$ is a negative number, it may be shifted the number of the continuous "1"s as illustrated in Figure 5(B). In this case, as regards the exponent parts $\gamma$, the operation of $(\gamma - \theta_1)$ is executed by the subtracter circuit 78, and its output $U_E$ is made a normalized exponent value. Unless the overflow occurs in the data $U_M$, the output $L_E$ of the increment circuit 83 becomes equal to the normalized exponent value $U_E$, and the processing of the normalization can be represented by the following equation:

$$\begin{aligned} Z &= \left[U_M \cdot 2^{\theta_1}\right] \cdot 2^{(\gamma - \theta_1)} \\[2mm] &= L_M \cdot 2^{L_E} \end{aligned} \quad \cdots\cdots(4)$$

Assuming the magnitude of the exponent part $\gamma$ to be 4 bits, values which $\gamma$ can express by the representation of 2's complements are limited within the range of

$$[+7 \geq \gamma \geq -8].$$

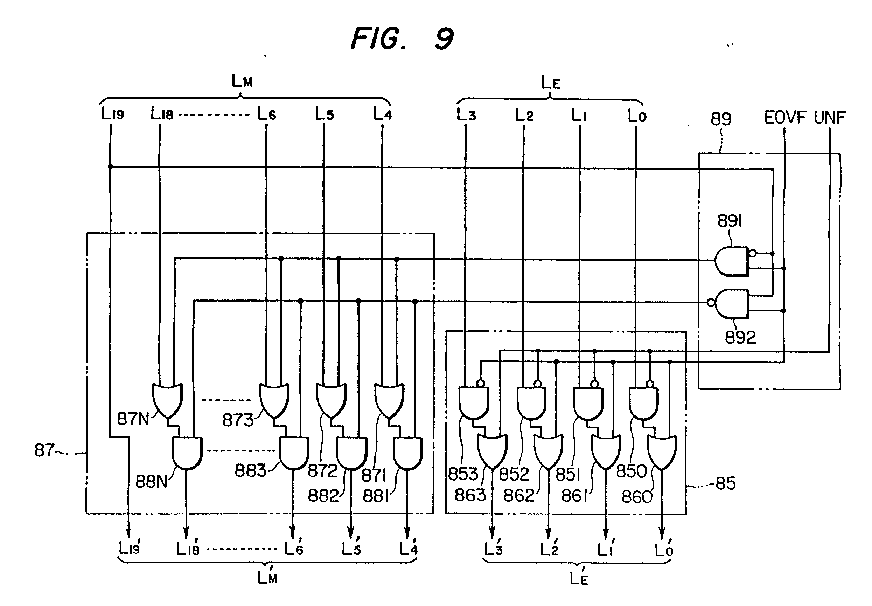

Accordingly, when it is intended in the normalization of the mantissa part data to shift the data $U_M$ leftwards fully the detection value $\theta_1$ of the zero detector circuit 79, the value of $(\gamma - \theta_1)$ on the exponent part side becomes smaller than $-8$, and underflow sometimes occurs in the subtracter circuit 78. At this time, the signal (borrow signal) UNF indicative of the underflow of the data is generated from the subtracter circuit 78 which executes the operation of $(\gamma - \theta_1)$. In the circuit of Figure 4(B), when the signal UNF has appeared,

6

the selector circuit 81 selects the output $\theta_2$ of the constant adder circuit 77 instead of the input $\theta_1$, and the constant adder circuit 77 provides as the data $\theta_2$ a value with a constant "8" added to the data $\gamma$ of the exponent part. Thus, by way of example, when the value of $\gamma$ is "−5", the value of $\theta_2$ becomes "3". Therefore, the shift number of bits of the mantissa part data $U_M$ is limited to 3 bits, and the value of the exponent part after the normalization remains at the minimum value "−8". The operation of making the exponent part "−8" upon the occurrence of the signal UNF is performed by the exponent part correction circuit 85 to be described later with reference to Figure 9.

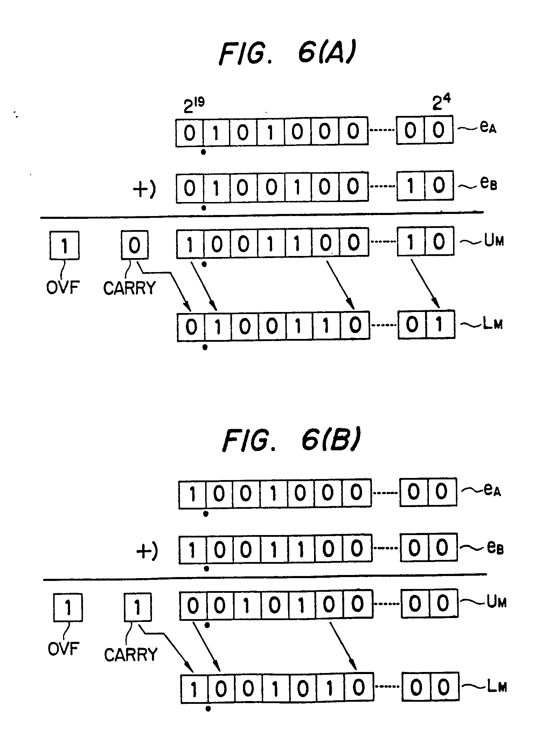

In the case where overflow has occurred in the operated result $U_M$ of the adder 75 as illustrated in Figures 6(A) and 6(B), the true sign of the data appears at the carry output, and the most significant bit of the numerical value appears at the position of the sign bit. In this case, accordingly, the overflow detection signal OVF may be used to stop the operations of the selector circuit 81 and the zero detector circuit 79, to cause the shift circuit 76 to perform the 1-bit right shift operation and to cause the increment circuit 83 to perform the operation of $U_E$ ($= \gamma$) + 1 so as to operate the data Z as in the following equation:

$$Z = [U_M \cdot 2^{-1}] \cdot 2^{(\gamma+1)} \tag{5}$$

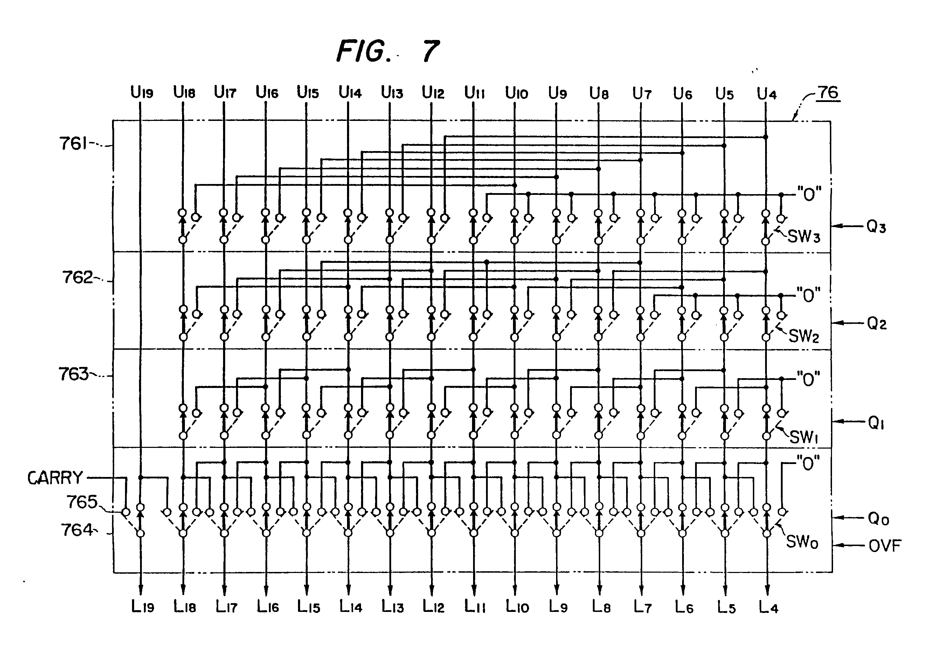

An example of the shift circuit 76 for executing the above operation is shown in Figure 7. This circuit comprises a shifter 761 of 8 bits, a shifter 762 of 4 bits, a shifter 763 of 2 bits and a shifter 764 of 1 bit which correspond to the respective bits $\theta_3$ to $\theta_0$ of the shift bit number-indicating data $\theta$. Switches $SW_3$ to $SW_0$ of the respective signal lines of the shifters are connected to contacts on less significant bit sides when the corresponding control bits $\theta_3$ to $\theta_0$ are "1". The respective switches $SW_0$ of the 1-bit shifter 764 are connected to contacts on the more significant bit sides when the overflow detection signal OVF is "1", the output line $L_{19}$ of the sign bit is connected with a carry signal input terminal 765, and the 1-bit right shift operation of the data stated above is realised.

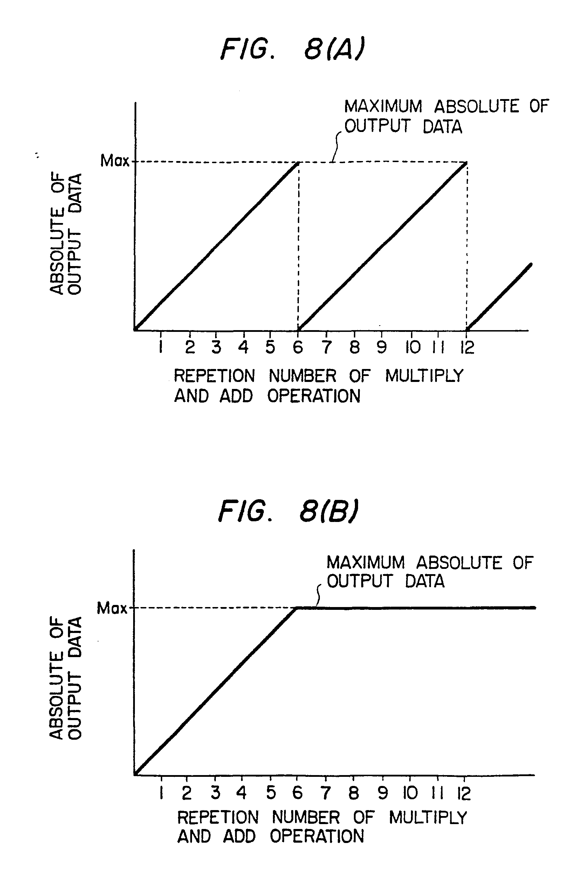

When, in the circuit of Figures 4(A) and 4(B), the overflow detection signal OVF of the adder 75 has become "1", an overflow sometimes occurs also in the operated result of ($\gamma$ + 1) by the increment circuit 83. In this case, the operated result Z ($= \alpha + \beta$) has undergone an overflow. If a multiply and add operation is continued in the condition left intact, the absolute value of the output data to be obtained in the accumulator 16 varies as shown in Figure 8(A) and becomes a quite meaningless value.

The control circuit 89 and the correction circuits 85 and 87 constitutes a circuit which operates upon the occurrence of the overflow in the operated result Z so as to fix the absolute value of the output data to the positive or negative maximum value as illustrated in Figure 8(B). The example of a preferred form of arrangement of these circuits is shown in Figure 9.

Referring to Figure 9, the exponent part correction circuit 85 consists of 2-input AND gates 850 to 853 and 2-input OR gates 860 to 863 which correspond to the input bits $L_0$ to $L_3$. The respective bit signals are delivered onto the accumulator 16X side through these gates. The AND gate 853 whose one input terminal receives the sign bit $L_3$ of the exponent part data has its other input terminal supplied with the inverted signal of the overflow detection signal EOVF provided from the increment circuit 83. The OR gate 863 whose one input terminal is connected with the output of the AND gate 853 has its other input terminal supplied with the underflow detection signal UNF from the subtractor circuit 78. The other input terminal of each of the AND gates 850 to 852 which are respectively supplied with the bits $L_0$ to $L_2$ is supplied with the inverted signal of the signal UNF, whilst the other input terminal of each of the OR gates 860 to 862 is supplied with the signal EOVF. The signals EOVF and UNF cannot become "1" at the same time. Therefore, when the signal EOVF is "1", the output of the exponent part correction circuit 85 becomes [0111] = +7 and makes the exponent part the maximum value. When the signal UNF is "1", it becomes [1000] = −8 and satisfies the exponent value for $\theta = \theta_2$ as stated before.

On the other hand, the mantissa part correction circuit 87 delivers the sign bit $L_{19}$ as it is and delivers the data bits $L_4$ to $L_{18}$ through 2-input OR gates 871 to 87N and 2-input AND gates 881 to 88N respectively. The other input terminal of each OR gate is supplied with the output of an AND gate 891 in the control circuit 89, whilst the other input terminal of each AND gate is supplied with the output of a NAND gate 892 in the control circuit 89. If, when the signal EOVF is "1", the mantissa part data is a positive value or the sign bit $L_{19}$ is "0", both the outputs of the AND gate 891 and the NAND gate 892 become "1", and the output of the correction circuit 87 becomes the positive maximum value [0111 .... 11]. If the sign bit $L_{19}$ is "1", the output of the NAND gate 892 become "0", so that the output of the correction circuit 87 becomes the negative maximum value [1000 ..... 00]. When the signal EOVF is "0", these correction circuits 85 and 87 deliver the respective input data $L_E$ and $L_M$ as data $L_E'$ and $L_M'$ as they are. These output data $L_E'$ and $L_M'$ are delivered to the A bus 27 through the accumulator 16 as well as the switching circuit 17, and are fed back to the selector circuit 61 of the adder/subtracter 15.

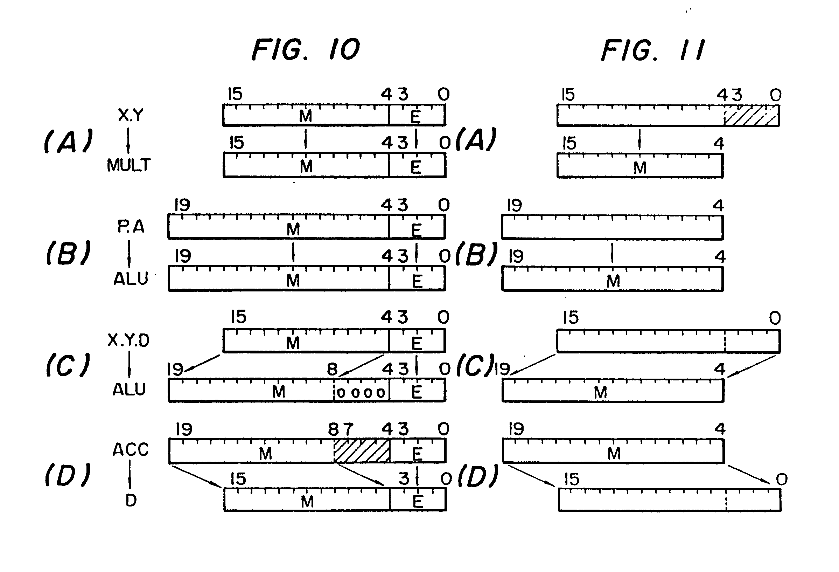

From the above description it will be understood that in the digital signal processor of the present invention, the multiplier 14 and the adder/subtracter 15 can perform floating point operations respectively. In the case, the data input from the X bus 21 or Y bus 22 into the multiplier 14 and the data input from the multiplier 12 or A bus 27 into the adder/subtracter (ALU) 15 agree in the number of bits of the input data and the number of bits of the data of the receiving side circuit, so that the bit positions are not altered between the data as illustrated in Figure 10(A) or 10(B). However, in the case where the 16-bit data from the X bus 25, Y bus 26 or D bus 20 are applied to the adder/subtracter 15, the number of bits of the mantissa part data is not equal. This necessitates the operations of adding "0"s to less significant 4 bits of the mantissa part input data M as illustrated in Figure 10(C) in the input selector circuits 60 and 61 of the adder/subtracter. In the case where the adder/subtracter output of 20 bits obtained in the accumulator (ACC) 16 is to be delivered to the D bus 20 of 16 bits, the operation of discarding the data of less-significant 4 bits of the mantissa part M and converting the 20-bit output into data of an exponent part of 4 bits and a mantissa part of 12 bits as illustrated in Figure (10D) is necessitated in the switching circuit 17.

In the above described digital signal processor, the input selector circuits 60 and 61 and the output switching circuit 17 which perform the foregoing data conversion operations are provided so that the processor can execute also fixed point operations by the appointment of a program.

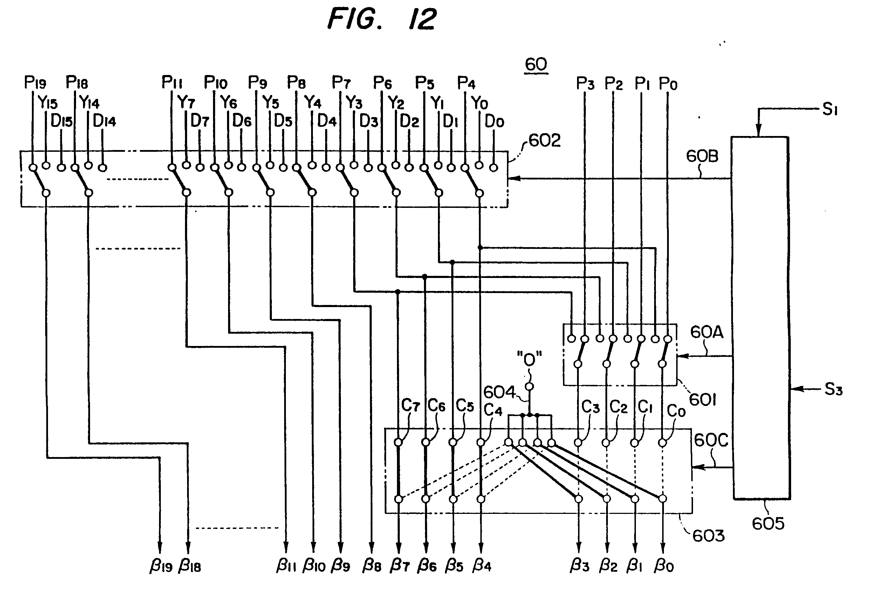

The multiplication of the fixed point data X and Y is carried out in the mantissa part data multiplier circuit 57 within the multiplier 14. In this case, of the input data X and Y of 16 bits, more-significant 12 bits to enter the mantissa part input registers 53 and 54 are handled as effective data as illustrated in Figure 11(A). On the other hand, in the case of the addition/subtraction of the fixed point data, the shift operations of the shift circuits 69 and 76 within the adder/subtracter 15 are stopped by the control bit in the program, and the operated result of mantissa parts obtained in this status is utilized. In order to stop the operation of the shift circuit 69, the control signal $S_7$ may be so generated that the operation instruction of the fixed point data applies a data of a numerical value "0" to the data line E in Figure 4(A) and that the selector circuit 70 selects an input from the data line E. In order to stop the operation of the shift circuit 76, the control signal $S_9$ may be so generated that the data of the numerical value "0" is applied to the data line F in Figure 4(B) and that the selector circuit 82 selects an input from the date line F.

In the addition/subtraction of the fixed point data, the data input from the multiplier 14 or A bus into the adder/subtracter 15 may be executed by feeding the 16-bit data of the mantissa part likewise to the case of a floating point operation as illustrated in Figure 11(B). The data input from the X bus, Y bus or D bus is executed by putting all the bits into the mantissa part as illustrated in Figure 11(C), and the mantissa part data obtained in the accumulator (ACC) has all the bits delivered to the D bus 20 as illustrated in Figure 11(D).

Figure 12 shows a preferred example of the input selector circuit 60 of the adder/subtracter provided with the bit exchange function referred to above. In this circuit diagram, $P_0$ to $P_{19}$, $Y_0$ to $Y_{15}$ and $D_0$ to $D_{15}$ indicate the bits of the input data from the P bus 24, Y bus 26 and D bus 20 respectively. Amongst them, the exponent part at $P_0$ to $P_3$ of the data P is applied to a switch 601, the four output terminals of which are connected to the terminals $C_0$ to $C_3$ of a switch 603. The respective bits of the data Y and D and the bis $P_4$ to $P_{19}$ of the mantissa part of the data P are applied to a switch 602. The output terminals of the switch 602 at more significant 12 bits are connected to output lines $\beta_8$ to $\beta_{19}$ of the more-significant bits of the data β, and the output terminals of the swtich 602 at less-significant 4 bits are connected to the terminals $C_4$ to $C_7$ of the swtich 603 and the other input terminals of the switch 601. The switch 603 is provided with eight output terminals which are connected to output lines $\beta_0$ to $\beta_7$ of the less-significant bits of the data β, and four terminals 604 which afford the status "0".

A logic circuit 605 generates drive signals 60A, 60B and 60C for the switches 601, 602 and 603 on the basis of the control signals $S_1$ and $S_3$ applied from the control circuit 4 in accordance with the instruction words of the program.

When a data to be selected is specified by the control signal $S_1$, the switches 601 and 602 are respectively operated by the signals 60A and 60B, and any one of the data P, Y and D is selected. At this time, if the control signal $S_3$ specifies a floating point operation, the switch 603 operates so as to connect the output lines $\beta_0$ to $\beta_3$ with the terminals $C_0$ to $C_3$ and the output lines $\beta_4$ to $\beta_7$ with the terminals $C_4$ to $C_7$ (when the input data P is selected) or the terminals 604 (when the input data Y or D is selected). If the control signal $S_3$ specifies a fixed point operation, the output lines $\beta_0$ to $\beta_3$ are connected with the terminals 604 and the output lines $\beta_4$ to $\beta_7$ with the terminals $C_4$ to $C_7$ irrespective of input data.

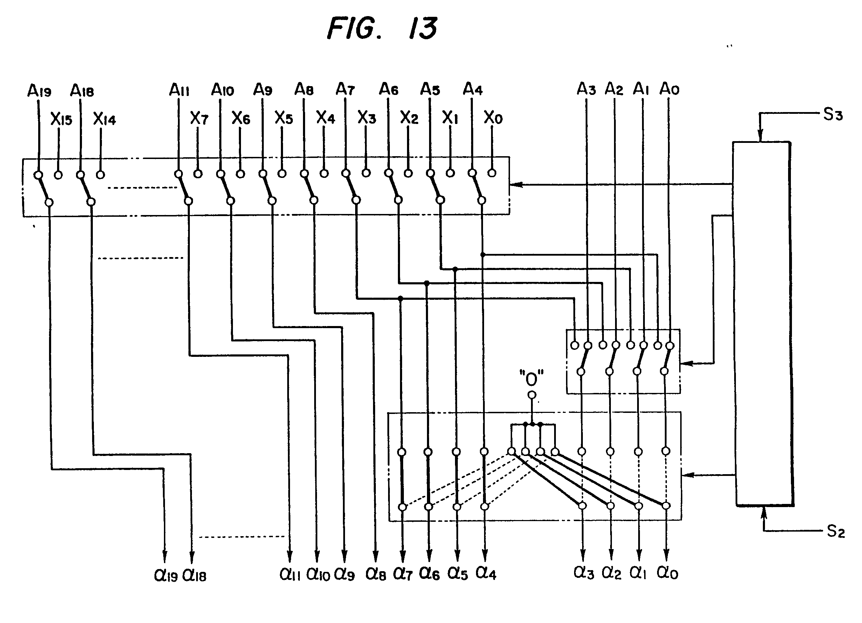

Figure 13 shows a preferred circuit arrangement of the input selector circuit 61. This circuit is the same as that in Figure 12 except that input data are applied from the A bus and the X bus, and accordingly no further explanation is given.

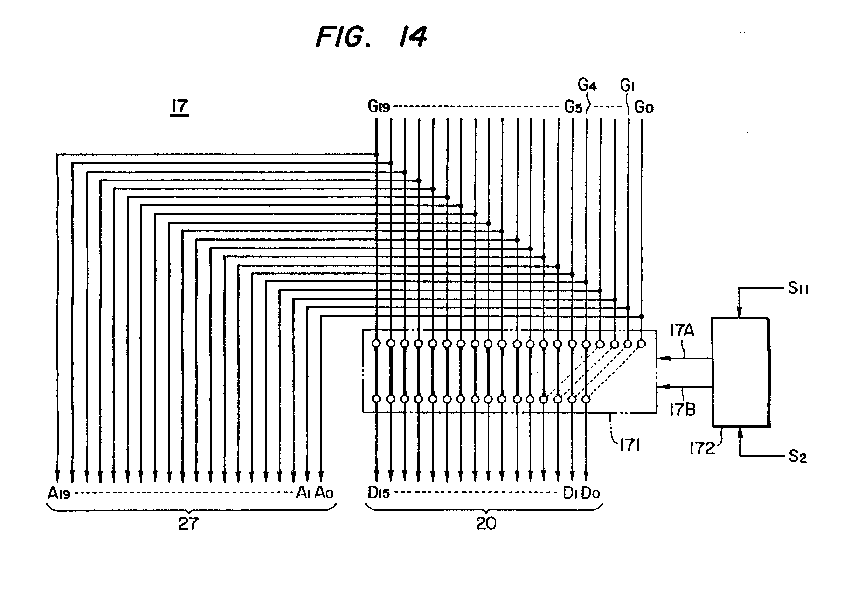

Figure 14 shows a preferred circuit arrangement of the switching circuit 17 which is connected to the accumulator 16. In this circuit, an output of 20 bits $G_0$ to $G_{19}$ from the accumulator is applied to the input terminals of a switch 171. The switch 171 has sixteen output terminals which are connected with the respective signal lines $D_0$ to $D_{15}$ of the data bus 20. The connections between the input terminals and the output terminals are controlled by output signals 17A and 17B from a logic circuit 172. In the case where the control signal $S_3$ based on the instruction of the program indicates a floating point operation, the switch 171 is controlled by the signal 17B and connects the signal lines $D_0$ to $D_3$ of less-significant 4 bits on the output side with the input signal lines $G_0$ to $G_3$. In the case of a fixed point operation, the switch 171 connects the lines $D_0$ to $D_3$ with the lines $G_4$ to $G_7$. The signal 17A controls the output of more-significant bit data to the data bus 20.

In the above describe embodiment, not only the operation of the fixed point data or the floating point data as described above can be performed, but also an operation can be performed by converting an operated result obtained in the floating point format into a data in the fixed point format in accordance with the instruction of a program or conversely conerting a data given in the fixed point format into a data in the floating point format. This function is very convenient when the signal processor exchanges data with an external device through the data bus 20 and the input/output interfaces 30 to 33. The reason therefor is as follows. Many of external devices to be connected with the signal processor handle data in the fixed point representation format, and if the floating point operation result of the signal processor is delivered as it is, a special device for converting the data format is required outside the processor.

The conversion from the floating point representation into the fixed point representation (hereinbelow, termed "FLFX") is carried out as follows.

Firstly, when a data in the floating point representation to be obtained in the accumulator 16 is assumed to be represented by the equation:

$$A = \alpha_M \cdot 2^{\}E}$$

a data $y_1 = \beta_M \cdot 2^{+E}$ whose exponent part satisfies the relation of $\alpha_E < \beta_E$ and whose mantissa part has the value of $\beta_M = 0$ is stored in a specified address of the data memory 5 and 6 in advance. This address corresponds with the address part of an instruction word for FLFX (Floating point to Fixed point) in advance. Various control signals are generated so that, when the instruction word has been executed, the selector circuit 8 may deliver to the Y bus 22 the data $y_1$ read out from the memory, the selector circuit 60 selecting an input from the Y bus, the selector circuit 61 selecting an input from the A bus 27, the selector circuit 82 selecting an input data F (= "0"), the output switch 17 operating to connect the input signals $G_4$ to $G_{19}$ to the data bus 20.

Thus, when the FLFX instruction has been executed, an operation is performed between the two floating-point data A and $y_1$, and the operated result of:

$$Z = A + y_1$$

$$= \left[ 0 + \alpha_M \cdot 2^{-(\beta_E - \alpha_E)} \right] \cdot 2^{\beta_E} \qquad \cdots \cdots (6)$$

is obtained in the accumulator 16. This data has been normalized with $2^{\beta_E}$ made the reference value of the exponent part, and the data $\alpha_M \cdot 2^{-(\beta_E - \alpha_E)}$ of the mantissa part delivered to the data bus 20 can be handled as a fixed point data.

Usually, the optimum value of $\beta_E$ cannot be precisely known for the internal operated result A. It is therefore preferable to select the value of $\beta_E$ to be somewhat larger. However, it should be noted that when the value of $\beta_E$ is made too large, the precision of the fixed point data is reduced. In the case where, in the execution of the FLFX, the exponent part $\alpha_E$ of the operated result Z has become greater than the exponent part $\beta_E$ of the data $y_1$ for conversion stored in the memory in advance, the overflow of the mantissa part in equation (6) develops. In this case, the absolute value of the fixed point data can be fixed to the positive or negative maximum value by the operation of the output correction circuit 80 as referred to before.

On the other hand, the operation of a data in the fixed point representation externally given into a data in the floating point representation inside the processor can be carried out as follows. Firstly, the instruction of transmitting to the accumulator 16 the fixed point data applied to the input register 31 is executed. With this instruction, the fixed point representation data D of 16 bits applied to the selector circuit 60 through the data bus 20 is brought into the mantissa part $\beta_M$ by the bit position exchange owing to the operation of the selector circuit 60, and it is applied to the mantissa part $16_M$ of the accumulator 16 through the selector circuit 67, shift circuit 69, latch circuit 72, adder 75, shift circuit 76 and correction circuit 87. In this case, the shift circuits 69 and 76 and the adder 75 are respectively controlled so as to pass the input data as they are.

Subsequently, the instruction of converting the fixed point representation into the floating point representation (hereinbelow, called "FXFL") is executed. In executing this instruction, the selector circuit 61 selects the accummulator output applied from the A bus 27 or the fixed point data A as the outputs $\alpha_M$ and $\alpha_E$. The selector circuit 60 selects as the outputs $\beta_M$ and $\beta_E$ a data $y_2$ for conversion which is assigned by the address part of the FXFL instruction and which is fetched from the memory 5 or 6 onto the Y bus 26. The data $y_2$ for conversion is, for example, such that the mantissa $\beta_M$ is zero and that the exponent part $\beta_E$ is selected from a range of values [+7 to −8] and has a certain reference value. Unlike cases of executing other instructions, in the case of executing the FXFL instruction, the control signal $S_4$ is generated to enable the selector circuit 62 to select the input $\beta_E$, and both the two inputs of the comparator circuit 63 are made $\beta_E$. In this case, the selector circuit 67 of the mantissa part is caused to select the input $\alpha_M$ and the selector circuit 68 to select the input $\beta_M$, and the selector circuit 65 of the exponent part is caused to select the input $\beta_E$. In addition, the selector circuit 70 is caused to select an input data E = "0" by the control signal $S_7$, to suppress the data shift operation of the shift circuit 69 in the rightwards direction.

Owing to the above control operations, the outputs of the latch circuits 71, 72 and 73 become $\gamma = \beta_E$, $e_A = \alpha_M$ and $e_B = O$. The data $e_A$ and $e_B$ are applied to the adder 75, and the added result $U_M (= \alpha_M)$ has its decimal point position moved $\theta_1$ bits under the operation of the zero detector circuit 79 and the leftwards shift circuit 76. As a result, a data represented by the equation:

EP 0 182 963 B1

$$Z = \left[ \alpha_M \cdot 2^{\theta_1} \right] \cdot 2^{(\beta_E - \theta_1)} \qquad \cdots \cdots (7)$$

is obtained in the accumulator 16. This expression signifies that the data $A = \alpha_M$ in the fixed point representation has been normalized with reference to the exponent $\beta_E$ and brought into the floating point representation. Accordingly, when the above referred to data obtained in the accumulator 16 with the instruction FXFL is employed, subsequent operations can be performed in the floating point format.

In this embodiment, after the data of the input register 31 has been set once in the accumulator 16, the FXFL instruction is executed. However, in the alternative form, the circuit design can be modified so that the input data in the fixed point representation and the data $y_2$ for conversion are applied to the adder/subtracter 15 by utilizing the X bus 25 and the D bus 20, whereby the data conversion into the floating point representation is permitted with a single instruction.

The above described digital signal processor can handle data in both the fixed point and floating point formats as stated above. Moreover, when an underflow has developed in an exponent part in the case of the normalization of a floating point representation data, the normalization operation with an exponent value fixed to the minimum value can be performed. Therefore, the arithmetic operation can be automatically changed-over to the floating point operation format in the case where the numerical value of an internal operation data is large, and to the fixed point operation format in the case where it is small. Thus, a very wide dynamic range can be attained.

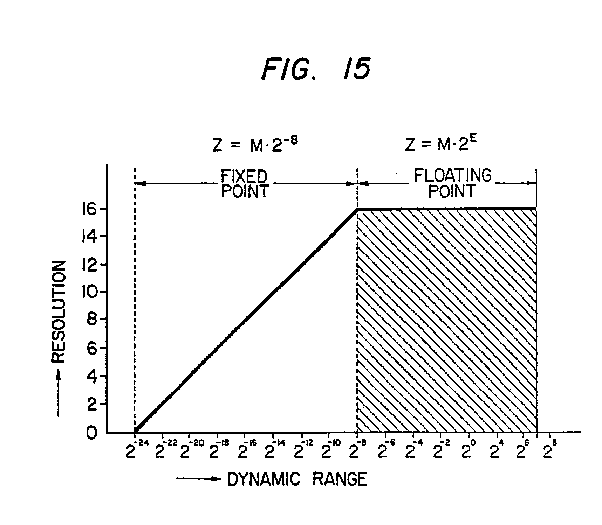

More specifically, in the case where the internal data of the adder/subtracter consists of the mantissa part of 16 bits and the exponent part of 4 bits as in the embodiment described above, the exponent part $\gamma$ can handle numerical values in the range of [+7 to −8] in the representation of 2's complements. When all operations are processed in the floating point format, the dynamic range becomes $2^{-8}$ to $2^7$ indicated by the hatched area in Figure 15, and this corresponds to 15 bits in terms of the number of bits.

When the number of normalized bits $\theta$ for the mantissa part of an operation data falls in a range of $(\gamma - \theta) < -8$, the exponent $L_E$ after the normalization is fixed to −8, whereby the arithmetic operation can be changed-over to the fixed point operation format. For this reason, the dynamic range becomes 31 bits as a whole as indicated in Figure 15, and the range of numerical values which can be treated spreads remarkably in comparison with that in the case of employing only one of the fixed and floating point formats.

In the actual application of the digital signal processor, it is often the case that $m$ multiply and add operations are repeatedly executed as indicated by way of example by the following equation:

$$T = \sum_{i=1}^{m} a_i \times b_i \qquad \cdots \cdots (8)$$

In the case of such an operation, it becomes possible to enhance the data processing efficiency and to perform operations at high speeds by means of the pipeline control which carries forward the multiplying and adding/subtracting operations in parallel.

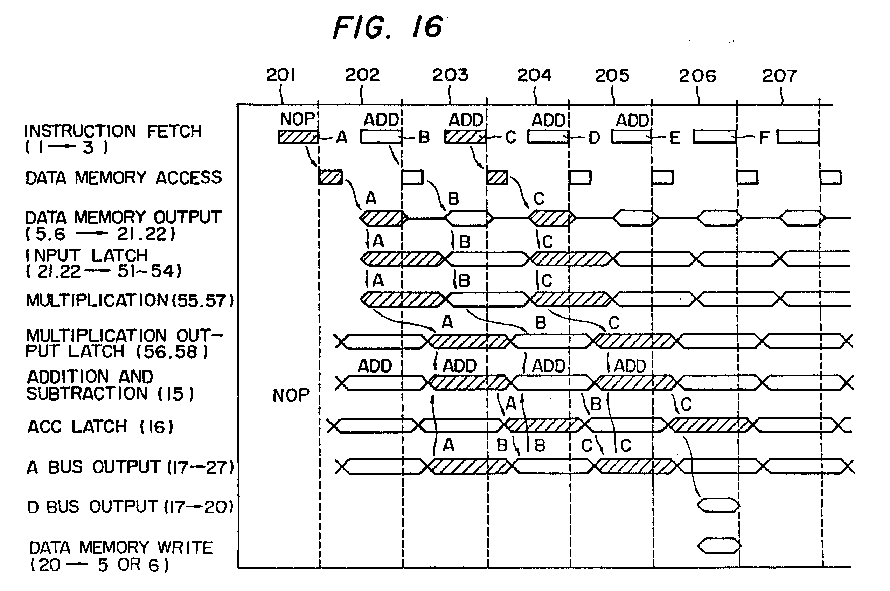

Figure 16 is a time chart showing an example of parallel operations. Using an instruction A previously fetched in an instruction cycle 201, data are read out from the data memories and are operated by a multiplier in the next cycle 202. In an instruction cycle 203, the addition or subtraction between the multiplied result and the data of the accumulator (A bus output) is executed. The operated result is delivered to the accumulator in a cycle 204. These operations of the four steps are repeated in the respective instruction cycles with each shift of 1 step. When the multiply and add operations of the predetermined times $m$ have ended, the operated result T is delivered to the data bus 20 and then transmitted to the data memory 5 or an external circuit by an instruction F.

The parallel operations of the processor based on the pipeline control are permitted owing to the fact that the multiplier 14 and the adder/subtractor 15 are connected in series, and also to the fact that the registers for temporarily holding data (in Figures 4(A) and 4(B), the latch circuits 71 and 72 correspond thereto) are arranged in positions in which required times for the operations of the multiplication and the addition/subtraction balance.

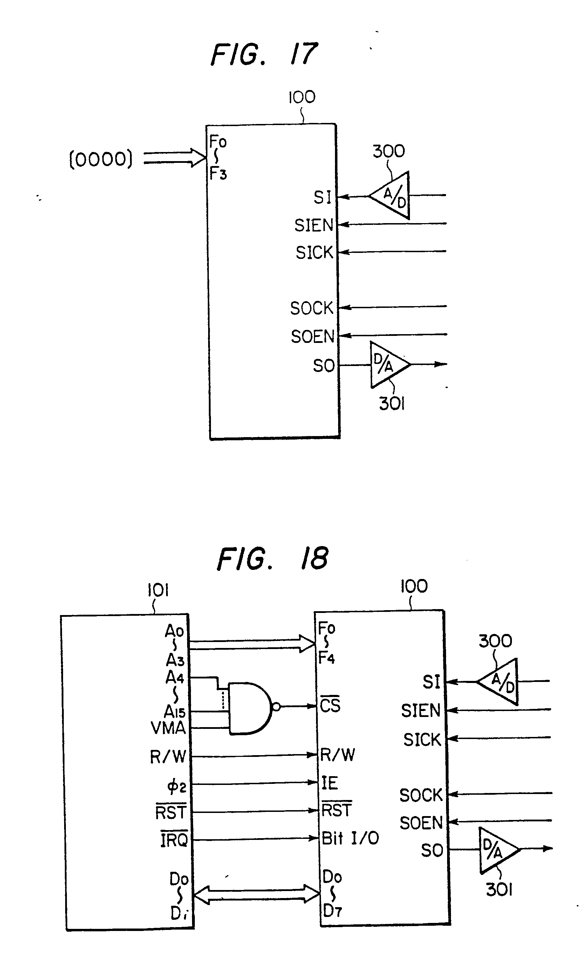

Figure 17 shows an example of the application of the above described digital signal processor, which illustrates a case where a processor 100 is connected to an analog circuit through an A/D converter 300 as well as a D/A converter 301 and where the function of a digital filter is effected.

Figure 18 shows a system construction in which the digital signal processor 100 is combined with another data processor 101, for example, our own microcomputer "MCS 6800", in order to exchange data therebetween through terminals $D_0$ to $D_7$, and in which the processings of data can be allotted to the two devices. This system construction is suitable in cases of applying the signal processor 100 to the modem or echo canceller of a communication line.

Attention is drawn to the invention claimed in European Specification 0051422 from which the present invention has been divided from.

10

## Claims

1. An adder for the addition of plural floating point data and for conversion of floating point data to corresponding fixed point data, comprising:

(a) adding means (75) for adding two adjusted mantissa parts ($e_A$, $e_B$);

(b) post adder shifting means (76) connected to said adding means (75) for shifting the output thereof;

(c) shift controlling means (79) for controlling the post adder shifting means (76) by an amount of shift determined in accordance with the output of the adding means (75) to provide a normalized mantissa;

(d) adjusting means (63—65, 67—69) for adjusting a pair of floating point input data ($\alpha_M$, $\beta_M$, $\alpha_E$, $\beta_E$) in order to provide for each data pair, an exponent part ($\gamma$) having the same value, and two adjusted mantissa parts ($e_A$, $e_B$)

(e) modifying means (78) connected to said shift controlling means (79) for providing a normalized exponent by modifying the exponent part ($\gamma$) provided from said adjusting means (63—65, 67—69) by an amount corresponding to the amount of shift provided by said shift controlling means (79) in order to provide a normalized exponent part of the sum of the data pair;

characterized in that said adder further comprises:

(f) input means (60, 61) responsive to a control signal ($S_1$, $S_2$, $S_3$) for selectively providing a first pair of first and second floating point input data which are to be mutually added, or a second pair consisting of a third floating point data and a reference value with regard to which the third floating point data is converted to a corresponding fixed point data;

(g) means (1, 3, 4) for providing said control signal having a first or a second state; and

(h) selector means (82) for delivering to the post adder shifting means (76) said amount of shift from said shift controlling means (79) when the control signal is in the first state and for delivering a zero shift amount when the control signal is in the second state, so that the output of said adding means (75) is either shifted or not shifted by the post adder shifting means (76) by an amount necessary for normalization of the output of said adding means (75) depending on whether or not said control signal ($s_9$) provided to the selector means (82) is in the first or second state; wherein said post adder shifting means (76) and said modifying means (78) respectively provide a normalized mantissa part and a normalized exponent part for the sum of the first data pair of the floating point data, when the first pair are selectively provided by said input means (60, 61), and the post adder shifting means (76) provides the fixed point data corresponding to the third floating point data, when the second pair of floating point data are selectively provided by said input means (60, 61).

2. An adder according to claim 1, characterized in that said shifting controlling means (79) includes means for detecting the number of successive bits including the most significant bit of the output of said adding means (75) having the same value as a sign bit of said output and for generating a shift data signal ($\theta_1$) having a value corresponding to said detected number.

3. An adder according to claim 2, characterized in that said modifying means (78) comprises means for subtracting the shift data signal from the exponent part of the output of said adjusting means (63—65, 67—69), including means for providing said underflow signal when the result of said subtraction operation is less than said minimum value.

4. An adder for the addition of two floating point data provided at first and second input lines ($\alpha_M$, $\alpha_E$, $\beta_M$, $\beta_E$) and for the conversion of fixed point data into corresponding floating point data, comprising:

(a) adding means (75);

(b) post adder shifting means (76) for shifting the output of said adding means (75);

(c) shift controlling means (79) for controlling the post adder shifting means (76) to effect a shift by an amount depending on the output of said adding means (75) in order to normalize the output thereof; and

(d) modifying means (78) connected to said shift controlling means (79);

(e) comparing means (63, 64) for comparing exponent parts of said first and second input lines ($\alpha_E$, $\beta_E$) to provide a comparison signal which shows which of the two exponent parts is larger, and a difference signal representing the value of the difference therebetween;

(f) first selection means (67) connected to said comparing means (63, 64) for selecting a mantissa part on one of the two input lines ($\alpha_M$, $\beta_M$) corresponding to the smallest exponent as indicated by said comparison signal;

(g) second selection means (68) connected to said comparing means (63, 64) for selecting a mantissa part on the other of the two input lines ($\alpha_M$, $\beta_M$) in response to said comparison signal;

(h) third selection means (65) for selecting an exponent part of the other of the two ($\alpha_E$, $\beta_E$) input lines in response to said comparison signal;

(i) first shift means (69) for shifting the output of said first selection means (67);

the operation being such that:

(i) said adding means (75) adds the output ($e_A$) of said first shift means (69) and the output ($e_B$) of said second selection means (68); and

(ii) said modifying means (78) modifies the output ($\gamma$) of said third selection means (65) by an amount corresponding to the amount of shift provided by said shift controlling means (79), in order to normalize the exponent part selected by said third selection means (65); and

characterized in that said adder further comprises:

11

EP 0 182 963 B1

(j) input means (60, 61) for selectively providing to said first and second input lines $(\alpha_M, \beta_E, \beta_M, \beta_E)$ either a first pair of first and second floating point data which are to be mutually added, or a second pair consisting of third floating point data provided at the first input $(\alpha_M, \alpha_E)$ and a reference value, provided at the second input $(\beta_M, \beta_E)$, the third floating point data having a mantissa part comprising fixed point data and an exponent part having a value of zero;

(k) forcing means (62) connected between the input means (60, 61) and said comparing means (63) and responsive to a control signal (S4) for forcing said comparison signal output from said comparing means (63, 64) to have a predetermined value which allows said first selection means (67) to select the first input line $(\alpha_M)$, and the second and third selection means (68, 65) to select the second input line;

(l) means (1, 3, 4) for providing said control signal to said forcing means (62) when the input means (60, 61) provides the second pair of data $(\beta_M, \beta_E)$;

(m) fifth selection means (70) connected between said comparing means (64) and said first shift means (69) for either providing the difference signal output from said comparison means (63, 64) or providing a zero value signal for application to said first shift means (69), depending on whether the first or second data pair is provided by said input means (60, 61);

the operation being such that:

(iii) said post adder shifting means (76) and said modifying means (78) respectively provide a normalized mantissa part and a normalized exponent part of either the sum of the first pair of data or floating point data corresponding to the fixed point data.

5. An adder according to claim 4, charaterized in that said input means (60, 61) comprises means (17) for providing the sum of the first data pair as the third floating data to convert the sum into fixed point data.

6. An adder according to claim 4, characterized in that the forcing means (62) comprises a fourth selection means for selectively connecting said second input line instead of the first input line to said comparing means (63, 64) in response to said control signal.

7. An adder for plural floating point data and for plural fixed point data provided at first and second input lines $(\alpha_M, \alpha_E, \beta_M, \beta_E)$, comprising:

(a) adding means (75) for adding two adjusted mantisse parts $(e_A, e_B)$;

(b) post adder shifting means (76) connected to said adding means (75) for shifting an output thereof;

(c) shift controlling means (79) connected to said adding means (75) for controlling the post adder shifting means (76) to effect a shift by an amount depending on the output of said adding means in order to normalize the output thereof;

(d) comparing means (63, 64) for comparing exponent parts on the first and second input lines in order to firstly provide a comparison signal which shows which of the exponent parts is larger, and secondly provide a difference signal which indicates the difference therebetween;

(e) first shifting means (67, 68, 69) connected to said comparing means (63) for shifting a mantissa part on one of said first and second input lines selected by the comparison signal by a first shift amount depending on the value of the difference signal;

(f) first selection means (65) connected to said comparing means (63) for selecting an exponent part on the other one of the first and second input lines in response to said comparison signal;

(g) modifying means (78) connected to said shift controlling means (79) for providing a normalized exponent part of the sum of the data by modifying the exponent part $(\gamma)$ provided from said first selection means (65) by an amount corresponding to the amount of shift provided by said shift controlling means (79);

characterized in that said adder further comprises:

(h) input means (60, 61) connected to inputs of said comparing means (63), said first shifting means (67, 68, 69) and said selection means (65), said input means (60, 61) selectively providing respectively, in first and second multiconductor input lines (20, 24, 25, 26, 27), either first and second floating point data or first and second fixed point data which are provided on respective conductors of the first and second input lines on which conductors mantissa parts of the first and second floating point data are respectively provided;

(i) second selection means (70) connected to said first shifting means (67, 68, 69) for selecting said difference signal from said comparing means (64) in response to a first control signal (S7) indicating a floating point operation and for selecting a zero value difference signal in response to the control signal indicating a fixed point operation thereby prohibiting the shifting operation of said first shifting means (67, 68, 69);

(j) third selection means (82) connected between said shift controlling means (79) and said post adder shifting means (76) for delivering to the post adder shifting means (76) said amount of shift in response to a second signal (S9) indicating a floating point operation and for delivering a zero shift signal indicating a fixed point operation for prohibiting the shifting operation of said post adder shifting means (76) in response to a second signal; and

(k) means (1, 3, 4) for providing said first and second control signals (57, 59) to said second and third selection means (70, 82) respectively, when said input means (60, 61) provides said first and second fixed point data;

the operation being such that said adding means (75) adds the shifted mantissa part on the other one of said first and second input lines.

8. An adder according to claims 1, 4 or 7, characterized in that said modifying means (78) provides difference data representing the difference between the value of said exponent part and said shift amount, and generates an underflow singal (UNF) when said difference is less than a minimum value predetermined for an exponent of any floating point data.

9. An adder according to claim 8, characterized in that it further comprises:

(o) means (85, 89) for providing as a normalized exponent part of the sum of two data, a minium value data corresponding to said minimum value or said different data depending on whether or not said underflow signal (UNF) is generated; and

(p) means (77, 81) for effecting the operation of the shift controlling means (79) with a second shift amount or said first shift amount depending on whether or not said underflow signal is generated, said second shift amount having a value equal to the difference between the exponent part and said minimum value so as to control said shift controlling means (79) to provide a normalized mantissa part for the sum of the two data.

10. An adder according to claims 1, 4, or 7, characterized in that said modifying means (78) provides a normalized exponent part of the sum of two data by modifying the same value exponent part depending on the post adder shift amount, and provides an exponent overflow signal (EOVF) when the normalized exponent part exceeds a predetermined maximum exponent value.

11. An adder according to claim 10, characterized in that it further comprises:

(q) means (85) for providing, instead of the normalized exponent part, a predetermined maximum exponent value in response to the exponent overflow signal; and

(r) means (87) responsive to said exponent overflow signal for providing, instead of the output data from post adder shifting means (76), a predetermined maximum positive value or a predetermined minimum negative value depending on the sign of the output data from the post adder shifting means in response to said exponent overflow signal.

12. An LSI digital processor employing an adder according to any one of the preceding claims.

**Patentanspruche**

1. Addierer zur Addition einer Vielzahl Gleitkommadaten und zur Umwandlung von Gleitkommadaten in entsprechende Festkommadaten, mit:

a) einer Addiereinrichtung (75) zur Addition zweier angepaßter Mantissenteile ($e_A$, $e_B$);

b) einer Nach-Addiere-Verschiebungseinrichtung (76), die mit der Addiereinrichtung (75) verbunden ist, um deren Ausgabe zu verschieben;

c) einer Verschiebungs-Steuereinrichtung (79), zur Steuerung der Nach-Addierer-Verschiebungseinrichtung (76) mittels eines Verschiebebetrages, der entsprechend der Ausgabe der Addiereinrichtung (75) bestimmt ist, um eine normalisierte Mantisse zu erhalten;

d) einer Anpassungseinrichtung (63—65, 67—69) zur Anpassung eines Paars Gleitkomma-Eingabedaten ($\alpha_M$, $\beta_M$, $\alpha_E$, $\beta_E$), um für jedes Datenpaar einen Exponententeil ($\gamma$) mit demselben Wert und zwei angepaßte Mantissenteile ($e_A$, $e_B$) zur erhalten;

e) einer Umformungseinrichtung (78), die mit der Verschiebungs-Steuereinrichtung (79), verbunden ist, um einen normalisierten Exponenten zu erhalten, um den von der Anpassungseinrichtung (63—65, 67—69) erhaltenen Exponenteil ($\gamma$) um einen Betrag zu verändern, der dem Betrag der von der Verschiebungs-Steuereinrichtung (79) durchgeführten Verschiebung entspricht, um einen normalisierten Exponententeil der Summe des Datenpaars zu erhalten;

dadurch gekennzeichnet, daß der Addierer weiterhin umfaßt;

f) eine auf ein Steuersignal ($S_1$, $S_2$, $S_3$) ansprechende Eingangseinrichtung (60, 61), um wahlweise ein erstes Parr erster und zweiter Gleitkomma-Eingangsdaten, die miteinander addiert werden sollen, oder ein zweites Paar, besteahend aus dritten Gleitkommadaten und einem Bezugswert, bezüglich dem die dritten Gleitkommadaten in entsprechende Festkommadaten umgewandelt werden, vorzusehen;

g) eine Einrichtung (1, 3, 4) zur Lieferung des Steuersignals mit einem ersten oder einem zweiten Zustand; und

h) eine Auswahleinrichtung (82), um der Nach-Addierer-Verschiebungseinrichtung (76) den Betrag der Verschiebung der Verschiebungs-Steuereinrichtung (79) zu liefern, wenn sich das Steuersignal in dem ersten Zustand befindet, und um einen Null-Verschiebungsbetrag zu liefern, wenn sich das Steuersignal in dem zweiten Zustand befindet, so daß die Ausgabe der Addiereinrichtung (75) von der Nach-Addierer-Verschiebungseinrichtung (76) um einen Betrag, der zur Normalisierung der Ausgabe der Addiereinrichtung (75) notwendig ist, entweder verschoben oder nicht-verschoben wird, in Abhängigkeit davon, ob sich das Steuersignal ($S_9$), das der Auswahleinrichtung (82) zugeführt wird, in dem ersten oder zweiten Zustand befindet;

wobei die Nach-Addierer-Verschiebungseinrichtung (76) und die Anpassungseinrichtung (78) entsprechenderweise einen normalisierten Mantissenteil und einen normalisierten Exponententeil für die Summe aus dem ersten Datenpaar der Gleitkommadaten liefern, wenn das erste Paar von der Eingagseinrichtung (60, 61) ausgewählt ist, und wobei die Nach-Addierer-Verschiebungseinrichtung (76) die Festkommadaten, die den dritten Gleitkommadaten entsprechen, liefert, wenn das zweite Paar Gleitkommadaten von der Eingangseinrichtung (60, 61) ausegwählt ist.

# EP 0 182 963 B1

2. Addierer nach Anspruch 1, dadurch gekennzeichnet, daß die Verschiebungs-Steuereinrichtung (79) eine Einrichtung zum Erkennen der Zahl der aufeinanderfolgenden Bits, einschließlich des höchstwertigsten Bits, der Ausgabe der Addiereinrichtung (75) aufweist, die denselben Wert wie ein Vorzeichenbit der Ausgabe aufweisen, und um ein Verschiebungs-Datensignal $(\theta_1)$ mit einem der erkannten Zahl entsprechenden Wert zu erzeugen.

3. Addierer nach Anspruch 1, dadurch gekennzeichnet, daß die Umformungseinrichtung (78) eine Einrichtung zur Subtraktion der Verschiebungs-Datensignals von dem Exponententeil der Ausgabe der Anpassungseinrichtung (63—65, 67—69) einschließlich einer Einrichtung zur Lieferung eines Unterlauf-Signals, wenn das Ergebnis der Subtraktionsoperation kleiner als ein Minimalwert ist, umfaßt.

4. Addierer zur Addition zweier Gleitkommadaten, die an ersten und zweiten Eingabeleitungen ($\alpha_M$, $\alpha_E$, $\beta_M$, $\beta_E$) geliefert werden, und zur Umwandlung von Festkommadaten in entsprechende Gleitkommadaten, umfassend:

a) eine Addiereinrichtung (75);

b) eine Nach-Addierer-Verschiebungseinrichtung (76) zur Verschiebung der Ausgabe der Addiereinrichtung (75);

c) eine Verschiebungs-Steuereinrichtung (79) zur Steuerung der Nach-Addierer-Verschiebungseinrichtung (76) um eine Verschiebung um einen Betrag zu bewirken, der von der Ausgabe der Addiereinrichtung (75) abhängt, um deren Ausgabe zu normalisieren; und

d) eine Umformungseinrichtung (78), die mit der Verschiebungs-Steuereinrichtung (79) verbunden ist;

e) eine Vergleichseinrichtung (63, 64), zum Vergleich der Exponententeile der ersten und zweiten Eingangsleitung ($\alpha_E$, $\beta_E$), um ein Vergleichssignal zu liefern, das anzeigt, welcher der beiden Exponententeile größer ist, und um ein Differenzsignal zu liefern, das den Wert der Differenz darstellt;

f) eine erste Auswahleinrichtung (67), die mit der Vergleichseinrichtung (63, 64) verbunden ist, um entsprechend dem von dem Vergleichssignal angezeigten kleinsten Exponenten einen Mantissenteil von einer der beiden Eingangsleitungen ($\alpha_M$, $\beta_M$) auszuwählen;

g) eine zweite Auswahleinrichtung (68), die mit der Vergleichseinrichtung (63, 64) verbunden ist, um in Antwort auf das Vergleichssignal Mantissenteil von der anderen der beiden Eingangsleitungen ($\alpha_M$, $\beta_M$) auszuwählen;

h) eine dritte Auswahleinrichtung (65) zu Auswahl eines Exponententeils auf der anderen der zwei Eingangsleitungen ($\alpha_E$, $\beta_E$) in Antwort auf das Vergleichssignal;

i) eine erste Verschiebungseinrichtung (69) zur Verschiebung der Ausgabe der ersten Auswahleinrichtung (67);

wobei die Arbeitsweise derart ist, daß:

i) die Addiereinrichtung (75) die Ausgabe ($e_A$) der ersten Verschiebungseinrichtung (69) und die Ausgabe ($e_B$) der zweiten Auswahleinrichtung (68) addiert; und

ii) die Umformungseinrichtung (78) die Ausgabe ($\gamma$) der dritten Auswahleinrichtung (65) um einen Betrag verändert, der dem von der Verschiebungs-Steuereinrichtung (79) gelieferten Verschiebungsbetrag entspricht, um den von der dritten Auswahleinrichtung (65) ausgewählten Exponententeil zu normalisieren; und

dadurch gekennzeichnet, daß der Addierer weiterhin umfaßt:

j) eine Eingangseinrichtung (60, 61), um den ersten und zweiten Eingangsleitungen ($\alpha_M$, $\alpha_E$, $\beta_M$, $\beta_E$) ausgewählt entweder ein erstes Paar erster und zweiter Gleitkomma-Eingangsdaten, die miteinander addiert werden sollen, oder ein zweites Paar, bestehend aus an dem ersten Eingang ($\alpha_M$, $\alpha_E$) vorgesehenen dritten Gleitkommadaten und einem an dem zweiten Eingang ($\beta_M$, $\beta_E$) vorgesehenen Bezugswert zu liefern, wobei die dritten Gleitkommadaten einen Mantissenteil mit Festkommadaten und einen Exponententeil mit dem Wert Null aufweisen;

k) eine zwischen der Eingangseinrichtung (60, 61) und der Vergleichseinrichtung (63) angeschlossene Zwangssteuerungseinrichtung (62), die auf ein Steuersignal ($S_4$) anspricht, um den Ausgang für das Vergleichssignal der Vergleichseinrichtung (63, 64) zu zwingen, einen vorbestimmten Wert anzunehmen, der der ersten Auswahleinrichtung (67) erlaubt, die erste Eingangsleitung ($\alpha_M$) und der zweiten und dritten Auswahleinrichtung (68, 65) erlaubt, die zweite Eingangsleitung auszuwählen;

l) eine Einrichtung (1, 3, 4) zur Lieferung des Steuersignals an die Zwangssteuerungseinrichtung (62), wenn die Eingangseinrichtung (60, 61) das zweite Datenpaar ($\beta_M$, $\beta_E$) liefert;

m) eine zwischen der Vergleichseinrichtung (64) und der ersten Verschiebungseinrichtung (69) angeschlossene fünfte Auswahleinrichtung (70), um entweder die Differenzsignal-Ausgabe der Vergleichseinrichtung (63, 64) oder ein Null-Wert-Signal zur Verwendung an die erste Verschiebungseinrichtung (69) zu liefern, in Abhängigkeit davon, ob von der Eingangseinrichtung (60, 61) das erste oder zweite Datenpaar geliefert wird;

wobei die Arbeitsweise derart ist, daß:

iii) die Nach-Addierer-Verschiebungseinrichtung (76) und die Umformungseinrichtung (78) entsprechenderweise einen normalisierten Mantissenteil und einen normalisierten Exponententeil von entweder der Summe des ersten Datenpaars oder von den Gleitkommadaten, die den Festkommadaten entsprechen, liefern.

5. Addierer nach Anspruch 4, dadurch gekennzeichnet, daß die Eingangseinrichtung (60, 61) eine Einrichtung (17) zur Lieferung der Summe des ersten Datenpaars als dritte Gleitkommadaten aufweist,

14

**EP 0 182 963 B1**

um die Summe in Festkommadaten umzuwandeln.

6. Addierer nach Anspruch 4, dadurch gekennzeichnet, daß die Zwangssteuerungseinrichtung (62) eine vierte Auswahleinrichtung zur wahlweisen Verbindung der zweiten Eingangsleitung anstelle der ersten Eingangsleitung mit der Vergleichseinrichtung (63, 64) in Antwort auf das Steuersignal aufweist.

7. Addierer für eine Vielzahl von Gleitkommandaten und für eine Vielzahl von Festkommandaten, die an ersten und zweiten Eingangsleitungen ($\alpha_M$, $\alpha_E$, $\beta_M$, $\beta_E$) geliefert werden, umfassend:

a) eine Addiereinrichtung (75) zur Addition zweier angepaßter Mantissenteile ($e_A$, $e_B$);

b) eine Nach-Addierer-Verschliebungseinrichtung (76), die mit der Addiereinrichtung (75) verbunden ist, um deren Ausgabe zu verschieben;

c) eine Verschiebungs-Steuereinrichtung (79), die mit der Addiereinrichtung (75) verbunden ist, zur Steuerung der Nach-Addierer-Verschiebungseinrichtung (76), um eine Verschiebung um einen Wert zu bewirken, der von der Ausgabe der Addiereinrichtung abhängt, um deren Ausgabe zu normalisieren;

d) eine Vergleichseinrichtung (63, 64) zum Vergleich der Exponententeile der ersten und der zweiten Eingangsleitung, um erstens ein Vergleichssignal zu liefern, das anzeigt, welcher der Exponententeile größer ist, und um zweitens ein Differenzsignal zu liefern, das deren Differenz anzeigt;

e) eine erste Verschiebungseinrichtung (67, 68, 69), die mit der Vergleichseinrichtung (63) verbunden ist, um den Mantissenteil auf einer der von dem Vergleichssignal ausgewählten ersten und zweiten Eingangsleitung um einen ersten Verschiebungsbetrag zu verschieben, der von dem Wert des Differenzsignals abhängt;

f) eine erste Auswahleinrichtung (65), die mit der Vergleichseinrichtung (63) verbunden ist, um in Antwort auf das Vergleichssignal einen Exponententeil auf der anderen der ersten und zweiten Eingangsleitung auszuwählen;

g) eine Umformungseinrichtung (78), die mit der Verschiebungs-Steuereinrichtung (79) verbunden ist, um einen normalisierten Exponententeil der Summe der Daten zu liefern, indem der Exponententeil ($\gamma$), der von der ersten Auswahleinrichtung (65) geliefert wird, um einen Betrag verändert wird, der dem Verschiebungsbetrag entspricht, der von der Verschiebungs-Steuereinrichtung (79) geliefert wird;

dadurch gekennzeichnet, daß der Addierer weiterhin umfaßt;

h) eine Eingangseinrichtung (60, 61), die mit Eingängen der Vergleichseinrichtung (63), der ersten Verschiebungseinrichtung (67, 68, 69) und der Auswahleinrichtung (65) verbunden ist, wobei die Eingangseinrichtung (60, 61) entsprechenderweise bei Mehrfach-Eingangsleitungen (20, 24, 25, 26, 27) entweder erste und zweite Gleitkommadaten oder erste und zweite Festkommadaten auswählt, die entsprechenderweise auf denjenigen Leitungen der ersten und zweiten Eingangsleitungen geliefert werden, auf denen entsprechenderweise Mantissenteile der ersten und zweiten Gleitkommadaten vorgesehen sind;

i) eine zweite Auswahleinrichtung (70), die mit der ersten Verschiebungseinrichtung (67, 68, 69) verbunden ist, um in Antwort auf ein erstes Steuersignal ($S_7$), das eine Gleitkomma-Operation anzeigt, das Differenzsignal der Vergleichseinrichtung (64) auszuwählen und um in Antwort auf das Steuersignal, das eine Festkomma-Operation anzeigt, ein Null-Wert-Differenzsignal auszuwählen, um dabei die Verschiebungsoperation der ersten Verchiebungseinrichtung (67, 68, 69) zu verhindern;

j) eine dritte Auswahleinrichtung (82), die zwischen der Verschiebungs-Steuereinrichtung (79) und der Nach-Addierer-Verschiebungseinrichtung (76) angeschlossen ist, um in Antwort auf ein zweites Signal ($S_9$), das eine Gleitkomma-Operation anzeigt, der Nach-Addierer-Verschiebungseinrichtung (76) den Verschiebungsbetrag zu liefern, und um in Antwort auf das zweite Steuersignal, das eine Festkomma-Operation anzeigt, einen Null-Verschiebungsbetrag zu liefern, um die Verschiebungsoperation der Nach-Addierer-Verschiebungseinrichtung (76) in Antwort auf das zweite Signal zu verhindern; und

k) eine Einrichtung (1, 3, 4), um die ersten und zweiten Steuersignale ($S_7$, $S_9$) entsprechenderweise der zweiten und dritten Auswahleinrichtung (70, 82) zu liefern, wenn die Eingangseinrichtung (60, 61) die ersten und zweiten Festkommadaten liefert;

wobei die Arbeitsweise derart ist, daß die Addiereinrichtung (75) den verschobenen Mantissenteil auf die andere der ersten und zweiten Eingangsleitung addiert.

8. Addierer nach Anspruch 1, 4 oder 7, dadurch gekennzeichnet, daß die Umformungseinrichtung (78) Differenzdaten liefert, die die Differenz zwischen dem Wert des Exponententeils un dem Verschiebungsbetrag darstellen, und ein Unterlaufsignal (UNF) erzeugt, wenn die Differenz kleiner als ein Minimalwert ist, der für den Exponenten irgendwelcher Fließkommadaten festgelegt ist.

9. Addierer nach Anspruch 8, dadurch gekennzeichnet, daß er weiterhin umfaßt;

o) eine Einrichtung (85, 89) zur Leiferung von Minimalwert-Daten als normalisierten Exponententeil der Summe zweier Daten, entsprechend dem Minimalwert oder den genannten Differenzdaten, in Abhängigkeit davon, ob das Unterlauf-Signal (UNF) erzeugt ist oder nicht; und

p) eine Einrichtung (77, 81), um zu bewirken, daß die Verschiebungs-Steuereinrichtung (79) in Abhängigkeit davon, ob das genannte Unterlauf-Signal erzeugt ist oder nicht, mit einem zweiten Verschiebungsbetrag oder mit dem ersten Verschiebungsbetrag arbeitet, wobei der zweite Verschiebungsbetrag eine Wert aufweist, der gleich der Differenz zwischen dem Exponententeil und dem genannten Minimalwert ist, so daß die Verschiebungs-Steuereinrichtung (79) so gesteuert wird, daß ein normalisierter Mantissenteil für die Summe der zweit Daten geliefert wird.

10. Addierer nach Anspruch 1, 4 oder 7, dadurch gekennzeichnet, daß die Umformungseinrichtung (78) einen normalisierten Exponententeil der Summe zweier Daten durch Veränderung desselben Wertes des

15

Exponenteils liefert, in Abhängigkeit von dem Nach-Addierer-Verschiebungsbetrag, und ein Exponenten-Überlaufsignal (EOVF) liefert, wenn der normalisierte Exponententeil einen vorbestimmten maximalen Exponentenwert überschreitet.

11. Addierer nach Anspruch 10, dadurch gekennzeichnet, daß er weiter umfaßt:

q) eine Einrichtung (85) zur Lieferung eines vorbestimmten maximalen Exponentenwertes anstelle des normalisierten Exponententeils in Antwort auf das Exponenten-Überlaufsignal; und

r) eine auf das Exponenten-Überlaufsignal ansprechende Einrichtung (87) zur Lieferung eines vorbestimmten maximalen positiven Wertes oder eines vorbestimmten minimalen negativen Wertes, in Abhängigkeit des Vorzeichens der Ausgangsdaten der Nach-Addierer-Verschiebungseinrichtung anstelle der Ausgabedaten der Nach-Addierer-Verschiebungseinrichtung (76) in Antwort auf das Exponenten-Überlaufsignal.

12. Digitaler LSI-Prozessor unter Verwendung eines Addierers nach einem der vorhergehenden Ansprüche.

**Revendications**

1. Additionneur pour réaliser l'addition de plusieurs données à virgule flottante et la conversion de données à virgule flottante en des données correspondantes à virgule fixe, comprenant:

(a) des moyens additionneurs (75) servant à additionner deux parties formant mantisses adjustées ($e_A$, $e_B$);

(b) des moyens de décalage (76) branchés en aval de l'additionneur et raccordés aux moyens additionneurs (75) pour décaler le signal de sortie de ces moyens;

(c) des moyens (79) de commande de décalage servant à commander les moyens de décalage (76) branchés en aval de l'additionneur, d'un décalage ayant une valeur déterminée en fonction de la sortie des moyens additionneurs (75) pour produire une mantisse normalisée;

(d) des moyens d'ajustement (63—65, 67—69) servant à ajuster un couple des données d'entrée à virgule flottante ($\alpha_M$, $\beta_M$, $\alpha_E$, $\beta_E$) pour produire, pour chaque couple de données, une partie formant exposant ($\gamma$) possédant la même valeur et deux parties formant mantisses ajustées ($e_A$, $e_B$),

(e) des moyens de modification (78) raccordés auxdits moyens (79) de commande de décalage pour produire un exposant normalisé par modification de la partie formant exposant ($\gamma$) délivrée par lesdits moyens d'adjustement (63—65, 67—69), d'une valeur correspondant à la valeur du décalage produit par lesdits moyens (79) de commande de déclage, pour produire une partie formant exposant normalisé de la somme du couple de données;

caractérisé en ce que ledit additionneur comporte en outre:

(f) des moyens d'entrée (60, 61) sensibles à un signal de commande ($S_1$, $S_2$, $S_3$) pour produire de façon sélective un premier couple de première et seconde données d'entrée à virgule flottante, qui doivent être additionnées entre elles, ou un second couple incluant une troisième donnée à virgule flottante et une valeur de différence, par rapport à laquelle la troisième donnée à virgule flottante est convertie en une donnée correspondante à virgule fixe.

(g) des moyens (1, 3, 4) servant à produire ledit signal de commande possédant un premier ou un second état; et

(h) des moyens de sélection (82) servant à délivrer aux moyens de décalage (76) branchés en aval de l'additionneur, ladite valeur du décalage délivré par lesdits moyens (79) de commande de décalage, lorsque les signal de commande est dans le premier état, et à délivrer une valeur de décalage nulle lorsque le signal de commande est dans le second état, de sorte que le signal de sortie desdits moyens additionneurs (75) est décalé ou ne l'est pas, par les moyens de décalage (76) branchés en aval de l'additionneur, d'un valeur nécessaire pour la normalisation du signal de sortie des moyens additionneurs (75) en fonction du fait que ledit signal de commande ($S_9$) envoyé aux moyens de sélection (82) est dans le premier ou le second étant; lesdits moyens des décalage (76) branchés en aval de l'additionneur et lesdits moyens de modification (78) produisant respectivement une partie formant mantisse normalisée et une partie formant exposant normalisé pour la somme du premier couple des données à virgule flottante, lorsque ce premier couple est délivré de façon sélective par lesdits moyens d'entrée (60, 61), et les moyes de décalage (76) branchés en aval de l'additionneur délivrant la donnée à virgule fixe correspondant à la troisième donnée à virgule flottante, lorsque le second couple de données à virgule flottante est délivré de façon sélective par lesdits moyens d'entrée (60, 61).

2. Additioneur selon la revendication 1, caractérisé en ce que lesdits moyens (79) de commande de décalage incluent des moyens pour détecter le nombre de bits successifs incluant le bit de poids le plus élevé du signal de sortie desdits moyens additionneurs (75), possédant la même valeur que le bit de signe dudit signal de sortie, et produire un signal de donnée de décalage ($\theta_1$) possédant une valeur correspondant audit nombre détecté.

3. Additionneur selon la revendication 2, caractérisé en ce que lesdits moyens de modification (78) comprennent des moyens pour soustraire le signal de données de décalage de la partie formant exposant du signal de sortie desdits moyens d'ajustement (63—65, 67—69), incluant des moyens pour produire ledit signal de dépassement de capacité négatif lorsque le résultat de ladite opération de soustraction est inférieur à ladite valeur minimale.

4. Additionneur servant à réaliser l'addition de deux données à virgule flottante circulant dans des première et seconde lignes d'entrées ($\alpha_M$, $\alpha_E$, $\beta_M$, $\beta_E$) et la conversion de données à virgule fixe en des données correspondantes à virgule flottant, comprenant:

(a) des moyens additionneurs (75);

(b) des moyens de décalage (76) branchés en aval de l'additionneur pour décaler le signal de sortie desdits moyens additionneurs (75);

(c) des moyens (79) de commande de décalage servant à commander les moyens de décalage (76) situés en aval de l'additionneur pour réaliser un décalage d'une valeur dépendant du signal de sortie desdits moyens additionneurs (75) afin de normaliser le signal de sortie de ces moyens; et

(d) des moyens de modification (78) raccordés auxdits moyens (79) de commande de décalage;

(e) des moyens comparateurs (63, 64) servant à comparer des parties formant exposants présentes dans lesdites première et seconde lignes d'entrée ($\alpha_E$, $\beta_E$) de manière à délivrer un signal de comparaison qui indique celle des deux parties formant exposants qui possède la valeur la plus grande, et un signal de différence représentant la valeur de la différence entre ces parties;

(f) des premiers moyens de sélection (67) raccordés auxdits moyens comparateurs (63, 64) pour sélectionner une partie formant mantisse présente dans l'une des deux lignes d'entrée ($\alpha_M$, $\beta_M$), correspondant au plus petit exposant tel qu'il est indiqué par ledit signal de comparison;

(g) des seconds moyens de sélection (68) raccordés auxdits moyens comparateurs (63, 64) pour sélectionner une partie formant mantisse présente dans l'autre des deux lignes d'entrée ($\alpha_M$, $\beta_M$), en réponse audit signal de comparison,

(h) des troisièmes moyens de sélection (65) servant à sélectionner une partie formant exposant de l'autre des deux lignes d'entrée ($\alpha_E$, $\beta_E$), en réponse audit signal de comparaison,

(i) de premiers moyens de décalage (69) servant à décaler le signal de sortie desdits premiers moyens de sélection (67);

l'opération étant telle que:

(i) lesdits moyens additionneurs (75) additionnent le signal de sortie ($e_A$) desdits premiers moyens de décalage (69) et le signal de sortie ($e_B$) desdits seconds moyens de sélection (68); et

(ii) lesdits moyens de modification (78) modifient le signal de sortie ($\gamma$) desdits troisièmes moyens de sélection (65), d'une valeur correspondant à la valeur du décalage fourni par lesdits moyens (79) de commande de décalage, de manière à normaliser la partie formant exposant sélectionnée par lesdits troisièmes moyens de sélection (65); et

caractérisé en ce que ledit additionneur comporte en outre:

(j) des moyens d'entrée (60, 61) servant à envoyer de façon sélective auxdites première et seconde lignes d'entrée ($\alpha_M$, $\beta_E$, $\beta_M$, $\beta_E$) soit un premier couple de première et seconde données à virgule flottante, qui doivent être additionnées entre elles, soit un second couple incluant une troisième donnée à virgule flottante envoyée à la première entrée ($\alpha_M$, $\alpha_E$) et une valeur de référence envoyée à la seconde entrée ($\beta_M$, $\beta_E$), la troisième donnée à virgule flottante possédant une partie formant mantisse comprenant une donnée à virgule fixe et une partie formant exposant possédant une valeur nulle;

(k) des moyens de forçage (62) branchés entre les moyens d'entrée (60, 61) et lesdits moyens comparateurs (63) et sensibles à un signal de commande ($S_4$) de manière à forcer ledit signal de sortie de comparaison délivré par lesdites moyens comparateurs (63, 64) de manière à obtenir une valeur prédéterminée qui permet auxdits premiers moyens de sélection (67) de sélectionner la première ligne d'entrée ($\alpha_M$), et aux seconds et troisièmes moyens de sélection (68, 65) des sélectionner la seconde ligne d'entrée;

(l) des moyens (1, 3, 4) servant à envoyer ledit signal de commande auxdits moyens de forçage (62) lorsque les moyens d'entrée (60, 61) délivrent le second couple de connées ($\beta_M$, $\beta_E$);

(m) des cinquièmes moyens de sélection (70) branchés entre lesdits moyens comparateurs (64) et lesdits premiers moyens de décalage (69) soite pour produire le signal de sortie de différence délivré par lesdits moyens comparateurs (63, 64), soit pour délivrer un signal de valeur nulle pour son application auxdits premiers moyens de décalage (69), en fonction du fait que le premier ou le second couple de données est délivré par lesdits moyens d'entrée (60, 61);

l'opération étant telle que

(iii) lesdits moyens de décalage (76) branchés en aval de l'additionneur et lesdits moyens de modification (78) fournissent respectivement une partie formant mantisse normalisée et une partie formant exposant normalisé soit de la somme des données du premier couple de données, soit une donnée à virgule flottante correspondant à la donnée à virgule fixe.

5. Additionneur selon la revendication 4, caractérisé en ce que lesdits moyens d'entrée (60, 61) comprenant des moyens (17) servant à délivrer la somme des données du premier couple de données en tant que troisième donnée à virgule flottante pour convertir la somme en la donnée à virgule fixe.

6. Additionneur selon la revendication 4, caractérisé en ce que les moyens de forçage (62) comprennent des quatrièmes moyens de sélection servant à raccorder de façon sélective ladite seconde ligne d'entrée à la place de la première ligne d'entrée auxdits moyens comparateurs (63, 64) en réponse audit signal de commande.

7. Additionneur servant à additionneur plusieurs données à virgule flottante et plusieurs données à virgule fixe envoyées dans des première et second lignes d'entrée ($\alpha_M$, $\alpha_E$, $\beta_M$, $\beta_E$), comprenant:

(a) des moyens additionneurs (75) servant à additionner deux parties formant mantisses adjustées ($e_A$, $e_B$);

(b) des moyens de décalage (76) branchés en aval de l'additionneur et raccordés auxdits moyens additionneurs (75) pour décaler un signal de sortie de ces moyens;

(c) des moyens (79) de commande de décalage raccordés auxdits moyens additionneurs (75) pour commander les moyens de décalage (76) branchés en aval de l'additionneur pour réaliser un décalage d'une valeur dépendant du signal de sortie desdits moyens additionneurs afin de normaliser le signal de sortie de ces moyens;

(d) des moyens comparateurs (63, 64) servant à comparer les parties formant exposants présentes dans les première et second lignes d'entrée afin, dans un premier temps, de délivrer un signal de comparaison qui indique laquelle des parties formant exposant possède la valeur la plus élevée, et en second lieu, produire un signal de différence indiquant la différence entre lesdites parties;

(e) des premiers moyens de décalage (67, 68, 69) raccordés auxdits moyens comparateurs (63) pour décaler une partie formant mantisse présente dans l'une desdites première et seconde lignes d'entrée sélectionnée par le signal de comparison, et ce d'une première valeur de décalage en fonction de la valeur du signal de différence;

(f) des premiers moyens de sélection (65) raccordés auxdits moyens comparateurs (63) pour sélectionner une partie formant exposant située dans l'autre des première et seconde lignes d'entrée en réponse audit signal de comparaison;

(g) des moyens de modification (78) raccordés auxdits moyens (79) de commande de décalage pour délivrer une partie formant exposant normalisé de la somme des données en modifiant la partie formant exposant ($\gamma$) délivrée par lesdits premiers moyens de sélection (65), d'une valeur correspondant à la valeur du décalage produit par lesdits moyens (79) de commande de décalage;

caractérisé en ce que ledit additionneur comporte en outre:

(h) des moyens d'entrée (60, 61) raccordés à des entrées desdits moyens comparateurs (63), desdits premiers moyens de décalage (67, 68, 69) et desdits moyens de sélection (65), lesdits moyens d'entrée (60, 61) délivrant de façon sélective respectivement, dans des première et seconde lignes d'entrée (20, 24, 25, 26, 27) à conducteurs multiples, soit des première et seconde données à virgule flottante, soit des première et seconde données à virgule fixe, qui sont envoyées dans des conducteurs respectifs des première et seconde lignes d'entrée, dans les conducteurs desquels sont envoyées respectivement les parties formant mantisses des première et second données à virgule flottante;

(i) des seconds moyens de sélection (70) raccordés auxdits premiers moyens de décalage (67, 68, 69) pour sélectionner ledit signal de différence délivré par lesdits moyens comparateurs (64) en réponse à un premier signal de commande ($S_7$) indiquant une opération à virgule flottante et sélectionner un signal de différence de valeur nulle en réponse au signal de commande indiquant une opération à virgule fixe, ce qui empêche l'opération de décalage desdits premiers moyens de décalage (67, 68, 69);

(j) des troisièmes moyens de sélection (82) branchés entre lesdits moyens (79) de commande de décalage et lesdits moyens de décalage (76) branchés en aval de l'additionneur et servant à délivrer à ces moyens (76) de décalage branchés en aval de l'additionneur ladite valeur de décalage en réponse à un second signal ($S_9$) indiquant une opération à virgule flottante et à délivrer une valeur de décalage nulle en réponse au second signal de commande indiquant une opération à virgule fixe de manière à empêcher l'opération de décalage desdits moyens de décalage (76) branchés en aval de l'additionneur, en réponse à un second signal; et

(k) des moyens (1, 3, 4) servant à envoyer lesdits premier et second signaux de commande ($S_7$, $S_9$) respectivement auxdits seconds et troisièmes moyens de sélection (70, 82) lorsque lesdits moyens d'entrée (60, 61) délivrent lesdites première et seconde données à virgule fixe;

l'operation étant telle que lesdits moyens additionneurs (75) ajoutent la partie formant mantisse décalée présente dans l'autre desdites première et seconde lignes d'entrée.

8. Additionneur selon les revendications 1, 4 ou 7, caractérisé en ce que les moyens de modification (78) envoient une donnée de différence représentant la différence entre la valeur de ladite partie formant exposant et ladite valeur de décalage, et produisent un signal de dépassement de capacité négatif (UNF), lorsque ladite différence est inférieure à une valeur minimale prédéterminée pour un exposant d'une quelconque donnée à virgule flottante.

9. Additionneur selon la revendication 8, caracterisé en ce qu'il comprend en outre:

(o) des moyens (85, 89) servant à délivrer, en tant que partie formant exposant normalisé de la somme de deux données, une donnée de valeur minimale correspondant à ladite valeur minimale ou à ladite donnée de différence en fonction du fait qu'un signal de dépassement de capacité négatif (UNF) est produit ou non; et

(p) des moyens (77, 81) pour effectuer l'opération des moyens (79) de commande de décalage avec une seconde valeur de décalage ou avec ladite première valeur de décalage en fonction du fait que ledit signal de dépassement de capacité inférieur est produit ou non, ladite seconde varleur de décalage étant égale à la différence entre la partie formant exposant et ladite valeur minimale de manière à commander lesdits moyens (79) de commande de décalage pour produire une partie formant mantisse normalisée pour la somme des deux données.

10. Additionneur selon la revendications 1, 4 ou 7, caractérisé en ce que lesdits moyens de modification (78) délivrent une partie formant exposant normalisé de la somme de deux données par modification de la partie formant exposant de même valeur, en fonction du degré de décalage en aval de l'additionneur, et délivrent un signal de dépassement de capacité positif de l'exposant (EOVF) lorsque la partie formant exposant normalisé dépasse une valeur maximale prédéterminée de l'exposant.

11. Additionneur selon la revendication 10, caractérisé en ce qu'il comprend en outre:

(q) des moyens (85) pour produire, à la place de la partie formant exposant normalisé, une valeur maximale prédéterminée d'exposant en réponse au signal de dépassement de capacité positif de l'exposant; et

(r) des moyens (87) sensibles audit signal de dépassement de capacité positif de l'exposant pour produire, à la place des données de sortie déliverées par les moyens de décalage (76) branchés en aval de l'additionneur, une valeur positive maximale déterminée ou une valeur négative minimale prédéterminée en fonction du signe des données de sortie des moyens de décalage branchés en aval de l'additionneur, en réponse audit signal de dépassement de capacité positif de l'exposant.

12. Processeur numérique à haute densité d'intégration utilisant un additionneur selon l'une quelconque des revendications précédentes.

FIG. I

## FIG. 2

## FIG. 3(A)

## FIG. 3(B)

# FIG. 4(A)

# FIG. 4(B)

## FIG. 5(A)

## FIG. 5(B)

## FIG. 6(A)

## FIG. 6(B)

FIG. 7

EP 0 182 963 B1

## *FIG. 8(A)*

MAXIMUM ABSOLUTE OF
OUTPUT DATA

Max

ABSOLUTE OF
OUTPUT DATA

1  2  3  4  5  6  7  8  9  10  11  12

REPETION NUMBER OF MULTIPLY
AND ADD OPERATION

## *FIG. 8(B)*

MAXIMUM ABSOLUTE OF
OUTPUT DATA

Max

ABSOLUTE OF
OUTPUT DATA

1  2  3  4  5  6  7  8  9  10  11  12

REPETION NUMBER OF MULTIPLY
AND ADD OPERATION

FIG. 9

EP 0 182 963 B1

*FIG. 10*

*FIG. 11*

FIG. 12

FIG. 13

EP 0 182 963 B1

FIG. 14

## FIG. 15

$$Z = M \cdot 2^{-8} \qquad Z = M \cdot 2^{E}$$

FIXED POINT — FLOATING POINT

RESOLUTION

DYNAMIC RANGE

FIG. 16

# FIG. 17

# FIG. 18

16